# EUROPÄISCHE PATENTSCHRIFT

(11) **EP 3 436 384 B1**
(45) Veröffentlichungstag und Bekanntmachung des Hinweises auf die Patenterteilung: **23.02.2022**
(21) Anmeldenummer: 17713939.1
(22) Anmeldetag: 28.03.2017
(51) Int. Cl.: B66B 5/02

(54) **VERFAHREN ZUM BETREIBEN EINER AUFZUGANLAGE SOWIE ZUR AUSFÜHRUNG DES VERFAHRENS AUSGEBILDETE AUFZUGANLAGE**
METHOD FOR OPERATING A LIFT SYSTEM AND LIFT SYSTEM DESIGNED FOR CARRYING OUT THE METHOD
PROCÉDÉ POUR FAIRE FONCTIONNER UNE INSTALLATION D'ASCENSEUR ET INSTALLATION D'ASCENSEUR CONÇUE POUR METTRE LE DIT PROCÉDÉ EN OEUVRE

(30) Priorität: 30.03.2016 DE 102016205236
(43) Veröffentlichungstag der Anmeldung: 06.02.2019
(73) Patentinhaber: TK Elevator Innovation and Operations GmbH, 40472 Düsseldorf (DE)
(72) Erfinder: ZERELLES, Holger, 70771 Leinfelden-Echterdingen (DE); STEINHAUER, Eduard, 72622 Nürtingen (DE); MATZ, Marius, 70794 Filderstadt (DE); THUM, Richard, 70806 Kornwestheim (DE)
(74) Vertreter: Michalski Hüttermann & Partner Patentanwälte mbB
(86) Internationale Anmeldenummer: PCT/EP2017/057241
(87) Internationale Veröffentlichungsnummer: WO 2017/167707

(56) Entgegenhaltungen:
- EP-A1- 0 212 147
- EP-A1- 0 499 254
- WO-A2-2008/136692
- JP-A- H05 132 257
- JP-A- H05 201 642
- JP-A- 2004 250 186

## Beschreibung

Die Erfindung betrifft ein Verfahren zum Betreiben einer Aufzuganlage, insbesondere einer mittels Linearmotoren betriebenen Aufzuganlage, wobei die Aufzuganlage ein wenigstens einen vertikalen Aufzugschacht umfassendes Schachtsystem und eine Mehrzahl von Fahrkörben, welche jeweils mehrere Funktionskomponenten zur Ausführung unterschiedlicher Funktionen aufweisen, umfasst.

Solche Aufzuganlagen sind im Stand der Technik bekannt. Beispielsweise sind unter dem Namen Twin^{®} Aufzuganlagen der Anmelderin bekannt, bei denen in einem Aufzugschacht zwei Aufzugkabinen separat voneinander verfahren werden können. Weiter ist unter dem Namen Multi^{®} von der Anmelderin eine mittels Linearmotoren betriebene Aufzuganlage vorgestellt worden. Bei einer solchen Aufzuganlage, die eine Mehrzahl von Fahrkörben umfasst, können die Fahrkörbe jeweils entlang von Schienen separat in vertikalen und horizontalen Aufzugschächten verfahren werden. Hierzu weisen die Fahrkörbe jeweils eigene Antriebseinheiten auf. Darüber hinaus sind im Stand der Technik weitere Aufzuganlagen beschrieben, bei der mehrere Fahrkörbe in einem Schachtsystem separat voneinander verfahren werden können.

Eine Problematik, die sich bei solchen Aufzuganlagen stellt, betrifft das Auftreten einer Störung bei einem der Fahrkörbe der Aufzuganlage. Eine Möglichkeit, mit dem Auftreten einer solchen Störung umzugehen, wäre es, die gesamte Aufzuganlage oder zumindest den Schacht, in dem sich der von der Störung betroffene Fahrkorb befindet, außer Betrieb zu nehmen. Hiermit ist selbstverständlich eine deutliche Reduzierung der Förderleistung der Aufzuganlage verbunden. Da der von der Störung betroffene Fahrkorb allerdings die weiteren Fahrkörbe bei deren Verfahren in dem Schachtsystem der Aufzuganlage behindert, insbesondere da dieser einen Abschnitt des Schachtsystems blockiert, kann die Aufzuganlage aber auch nicht ohne Weiteres mit den weiteren, von der Störung nicht betroffenen Fahrkörben weiter betrieben werden. Darüber hinaus könnten sich in dem von der Störung betroffenen Fahrkorb noch Personen befinden, die aus dem Fahrkorb herausgeholt werden müssen.

Hinsichtlich dieser Problematik sind bereits unterschiedliche Lösungsansätze vorgeschlagen worden. Für eine Aufzuganlage mit zwei Fahrkörben in einem Schacht wurde in der JP 2004250186 A vorgeschlagen, jeweils für den oberen Fahrkorb und den unteren Fahrkorb eine Art Seilwinde vorzusehen, die bei einem Ausfall des jeweiligen Fahrkorbs eingesetzt werden können, um den Fahrkorb zu verfahren. Unter anderem ist dabei vorgesehen, die beiden Fahrkörbe mechanisch zu verbinden. Nachteilig bei dieser Lösung ist, dass extra Winden vorgesehen werden müssen. Darüber hinaus ist diese Lösung nur für die in der Druckschrift beschrieben Aufzuganlage geeignet.

JP H05 201642 A zeigt eine Vorrichtung zum Abschleppen eines havarierten Fahrkorbs.

Aus der DE 10 2014 105 004 A1 ist ein Verfahren zum Betreiben eines Aufzugssystems mit Treibscheibenabtrieb bekannt, wobei mehrere Fahrkörbe in einem einzigen Aufzugschacht unabhängig voneinander oder aneinander gekoppelt verfahren werden können. Eine solche Kopplung ist dabei auch möglich, wenn der Treibscheibenantrieb für einen Fahrkorb ausfällt. Damit kann dieser Fahrkorb mittels der weiteren Kabine zu dem nächstgelegenen Stockwerk verbracht werden, sodass Passagieren diesen Fahrkorb dort verlassen können. Für andere mögliche Defekte, insbesondere Defekte, bei denen eine Funktion einer Funktionskomponente eines Fahrkorbs ausfällt, offenbart die DE 10 2014 105 004 A1 keine Lösungen. Zudem kann mittels des Verfahrens nur eine Positionsänderung des von der Störung betroffenen Fahrkorbs bewirkt werden, sodass ein Weiterbetrieb der Aufzuganlage mit dem von der Störung betroffenen Fahrkorb nicht möglich ist.

Aus der EP 2 041 015 B1 ist ferner eine Aufzuganlage mit einer Mehrzahl von Fahrkörben, die individuell in einem Schachtsystem verfahren werden können, bekannt. Bei dieser Aufzuganlage wird das Auftreten einer Störung des Kommunikationssystems, die lediglich einen Fahrkorb betrifft, erkannt. Nachdem diese Störung erkannt wurde, wird ein Befehl an den von der Störung betroffenen Fahrkorb übertragen, woraufhin dieser Fahrkorb außerhalb der normalen Verkehrswege der übrigen Fahrkörbe der Aufzuganlage geparkt wird. Die Aufzuganlage kann dann mit den weiteren Fahrkörben weiter betrieben werden.

Eine weitere Aufzuganlage mit einer Mehrzahl von Fahrkörben, die individuell in einem Schachtsystem verfahren werden können, ist aus der WO 2004/043842 A1 bekannt. Tritt eine Störung an einem Fahrkorb auf, so ist vorgesehen, dass dieser Fahrkorb nicht weiter benutzt wird, und die übrigen Fahrkörbe davon unbeeinflusst weiter betrieben werden können.

Sowohl in der EP 2 041 015 B1 als auch in der WO 2004/043842 A1 ist dabei Voraussetzung, dass die von der Störung betroffenen Fahrkörbe noch weiter verfahren werden können. Diese Voraussetzung ist allerdings nicht stets erfüllt. Insbesondere kann der Fall auftreten, dass ein Fahrkorb in einem Schacht des Schachtsystems blockiert ist. Darüber hinaus kann bei einer Aufzuganlage, die mittels Linearmotoren betrieben wird, der Fall auftreten, dass ein Schienenstrangabschnitt, an welchem sich ein Fahrkorb befindet, nicht bestromt werden kann, sodass dieser Fahrkorb nicht selbständig von diesem Schienenstrangabschnitt verfahren werden kann.

Vor diesem Hintergrund ist es eine Aufgabe der vorliegenden Erfindung, eine Aufzuganlage, insbesondere eine mittels Linearmotoren betriebene Aufzuganlage, wobei die Aufzuganlage ein wenigstens einen vertikalen Aufzugschacht umfassendes Schachtsystem und eine Mehrzahl von Fahrkörben umfasst, zu verbessern und ein verbessertes Verfahren zum Betreiben einer solchen Aufzuganlage bereitzustellen. Vorteilhafterweise soll es ermöglicht werden, auch beim Auftreten einer Störung, von der nicht sämtliche Fahrkörbe der Aufzuganlage betroffen sind, die Aufzuganlage weiter zu betreiben, insbesondere auch dann, wenn die Störung ein Verfahren des betroffenen Fahrkorbs im Normalbetrieb der Aufzuganlage verhindert.

Zur Lösung dieser Aufgabe werden ein Verfahren zum Betreiben einer Aufzuganlage und eine Aufzuganlage gemäß den unabhängigen Ansprüchen vorgeschlagen. Weitere vorteilhafte Ausgestaltungen der Erfindung sind in den abhängigen Ansprüchen und der Beschreibung beschrieben.

Die vorgeschlagene Lösung sieht ein Verfahren zum Betreiben einer Aufzuganlage nach Anspruch 1 vor.

Fällt also eine Funktion eines Fahrkorbs einer erfindungsgemäß betriebenen Aufzuganlage aus, so wird vorteilhafterweise diese Funktion durch eine Ersatzfunktion ersetzt. Diese Ersatzfunktion wird dabei vorteilhafterweise durch eine diesem Fahrkorb zugeordnete Hilfseinrichtung oder auch durch mehrere diesem Fahrkorb zugeordnete Hilfseinrichtungen bereitgestellt. Sollten mehrere Funktionen eines Fahrkorbs einer erfindungsgemäß betriebenen Aufzuganlage ausfallen, so werden vorteilhafterweise diese mehreren Funktionen durch eine oder mehrere entsprechende Ersatzfunktionen ersetzt. Diese Ersatzfunktion beziehungsweise diese Ersatzfunktionen werden dabei wiederum durch die wenigstens eine Hilfseinrichtung, die dem betroffenen Fahrkorb zugeordnet wird, bereitgestellt. Es ist vorgesehen, dass die Hilfseinrichtung für wenigstens eine Funktion, die originär von dem Fahrkorb der jeweiligen Aufzuganlage bereitgestellt wird, eine Ersatzfunktion bereitstellt, die dann die entsprechende Funktion des Fahrkorbs ersetzt. Weisen die Fahrkörbe beispielsweise keine eigene Antriebseinheit auf, wie insbesondere bei Treibscheibenaufzügen der Fall, so wird für die Funktion des Antriebs seitens der Hilfseinrichtung keine Ersatzfunktion bereitgestellt, weil in diesem Fall die Antriebsfunktion - auch nicht teilweise - durch den Fahrkorb bereitgestellt wird. Andere Funktionen des Fahrkorbs, wie insbesondere die Funktion der Steuereinheit, können dagegen auch bei einem Treibscheibenaufzug durch die Hilfseinrichtung bereitgestellt und ersetzt werden.

Besonders vorteilhaft ist das vorgeschlagene Verfahren bei einer dezentral ausgebildeten Aufzuganlage, bei der eine Vielzahl von Funktionen nicht zentral von der Aufzuganlage bereitgestellt werden, sondern die einzelnen Fahrkörbe jeweils entsprechende Funktionskomponenten zur Ausführung dieser Funktionen aufweisen. Solche Funktionskomponenten, die die Fahrkörbe der Aufzuganlage dabei jeweils aufweisen können, sind insbesondere eine eigene Antriebseinheit und/oder eine eigene Steuereinheit mit einer Mehrzahl von Steuerfunktionen und/oder eine eigene Sensoreinheit, insbesondere eine Sensoreinheit zu Bestimmung von einem oder mehreren Betriebsparametern, wie insbesondere der aktuellen Position des jeweiligen Fahrkorbs, der aktuellen Geschwindigkeit des jeweiligen Fahrkorbs, der aktuellen Last, mit der der jeweilige Fahrkorb beladen ist, und/oder der aktuellen Beschleunigung des jeweiligen Fahrkorbs.

Gemäß einer vorteilhaften Ausgestaltung der Erfindung wird mittels einer Diagnoseeinheit bestimmt, welche Funktion des ersten Fahrkorbs durch die seitens der wenigstens einen Hilfseinrichtung bereitgestellte Ersatzfunktion ersetzt werden soll. Dabei kann vorgesehen werden, dass die Fahrkörbe jeweils eine solche Diagnoseeinheit aufweisen und/oder die Aufzuganlage eine zentrale Diagnoseeinheit aufweist und/oder die wenigstens eine Hilfseinrichtung eine solche Diagnoseeinheit aufweist. Die Funktionskomponente des ersten Fahrkorbs, deren Funktion durch die seitens der wenigstens einen Hilfseinrichtung bereitgestellte Ersatzfunktion ersetzt wird, wird vorteilhafterweise deaktiviert, vorteilhafterweise unter Nutzung der Diagnoseeinheit.

Gemäß einer weiteren vorteilhaften Ausgestaltung der Erfindung wird ein Schutzbereich um den ersten Fahrkorb gebildet. Insbesondere dürfen weitere Fahrkörbe der Aufzuganlage nicht in den Schutzbereich einfahren, sodass dieser Schutzbereich vorteilhafterweise der Vermeidung von Kollisionen dient. Vorteilhafterweise darf die wenigstens eine Hilfseinrichtung in den Schutzbereich verbracht werden. Angaben zu den Grenzen des Schutzbereichs, insbesondere entsprechende auf das Schachtsystem bezogenen Positionsdaten, werden vorteilhafterweise an die wenigstens eine Hilfseinrichtung übertragen. Insbesondere zur Kollisionsvermeidung wird die wenigstens eine Hilfseinrichtung dabei vorteilhafterweise unter Nutzung von Mitteln zur Überwachung des Abstands zu dem ersten Fahrkorb zu dem ersten Fahrkorb verbracht. Diese Mittel sind beispielsweise ein im Stand der Technik bekanntes Ultraschall-, Laser- oder Radarsystem, mit dem der Abstand zu einem Hindernis bestimmt werden kann. Vorteilhafterweise ist durch diese Ausgestaltung die Wahrscheinlichkeit von Kollisionen zwischen dem ersten Fahrkorb und weiteren Fahrkörben sowie zwischen dem ersten Fahrkorb und der wenigstens einen Hilfsreinrichtung weiter reduziert.

Weiter vorteilhaft werden die Positionen der Fahrkörbe der Aufzuganlage bestimmt. Diese Bestimmung erfolgt entweder absolut, insbesondere mittels sogenannter Schachtinformationssysteme, oder relativ, indem insbesondere Abstände zwischen den einzelnen Fahrkörben erfasst werden. Im Fehlerfall, insbesondere wenn eine Funktionskomponente eines Fahrkorbs nicht richtig arbeitet oder wenn die Position eines Fahrkorbs nicht erfasst werden kann, wird dann der Schutzbereich um den ersten Fahrkorb gebildet. Vorteilhafterweise wird die Position des ersten Fahrkorbs und/oder die Position des um den ersten Fahrkorb gebildeten Schutzbereichs an die wenigstens eine Hilfseinrichtung übertragen. Unter Nutzung von Abstandsüberwachung, insbesondere von sicherheitsgerichteter Abstandsüberwachung, wird die wenigstens eine erste Hilfseinrichtung dann in den Schutzbereich zu dem ersten Fahrkorb verbracht.

Insbesondere ist als eine weitere Ausgestaltung der Erfindung vorgesehen, dass erkannt wird, dass ein erster Fahrkorb in dem Schachtsystem, insbesondere in einem vertikalen Aufzugschacht oder in einem horizontalen Aufzugschacht, havariert ist und somit nicht normal betrieben werden kann. Vorteilhafterweise erfasst die wenigstens eine Hilfseinrichtung die Position des ersten Fahrkorbs, insbesondere unter Nutzung eines sogenannten Absolut Position Sensors (APS) oder über die zuletzt berechnete Position des ersten Fahrkorbs. Dabei wird die wenigstens eine erste Hilfseinrichtung zu dem ersten Fahrkorb verbracht. Zur weiter verbesserten Absturzsicherung der wenigstens einen ersten Hilfseinrichtung sieht eine vorteilhafte Weiterbildung der Erfindung vor, dass die wenigstens eine erste Hilfseinrichtung mit einer Zusatzsicherung verbunden wird, insbesondere mit einem Kran oder eine Winde. Eine solche Zusatzsicherung ist insbesondere bei einer vertikalen Bergung des ersten Fahrkorbs, also bei einer Bergung in einem vertikalen Aufzugschacht, vorteilhaft. Vorteilhafterweise wird die wenigstens eine erste Hilfseinrichtung mit dem ersten Fahrkorb gekoppelt. Dabei stellt die wenigstens eine erste Hilfseinrichtung dem ersten Fahrkorb wenigstens eine Ersatzfunktion bereit. Insbesondere ist vorgesehen, dass die wenigstens eine erste Hilfseinrichtung den ersten Fahrkorb sichert, insbesondere gegen Absturz, und/oder den ersten Fahrkorb mit Energie versorgt und/oder die Ansteuerung des ersten Fahrkorbs übernimmt. Ist die wenigstens eine erforderliche Ersatzfunktion bereitgestellt, wird vorteilhafterweise die Bremseinheit des ersten Fahrkorbs gelöst. Im Falle einer mechanischen Deaktivierung der Bremse wird vorteilhafterweise eine mechanische Entriegelungseinheit bereitgestellt. Vorteilhafterweise wird mittels der mechanischen Entriegelungseinheit die Bremse des ersten Fahrkorbs manuell gelöst. Nach dem Lösen der Bremse wird der erste Fahrkorb unter Nutzung der wenigstens einen Hilfseinrichtung verfahren.

Eine weitere vorteilhafte Ausgestaltung der Erfindung sieht vor, dass die wenigstens eine Hilfseinrichtung der Aufzuganlage eine eigene Antriebseinheit aufweist, mittels welcher die wenigstens eine dem ersten Fahrkorb zugeordnete Hilfseinrichtung über das Schachtsystem zu dem ersten Fahrkorb verfahren wird. Vorteilhafterweise ist die Aufzuganlage eine mittels Linearmotoren betriebene Aufzuganlage, wobei die Fahrkörbe und auch die wenigstens eine Hilfseinrichtung entlang der innerhalb des Schachtsystems installierten Schienen des Linearmotors mittels entsprechender Antriebseinheiten verfahren werden können. Vorteilhafterweise weist die wenigstens eine Hilfseinrichtung eine aktive Antriebseinheit auf, mit der die Hilfseinrichtung vorteilhafterweise unabhängig von einer seitens der Aufzuganlage bereitgestellten Antriebseinheit ist. Durch das Verfahren der wenigstens einen Hilfseinrichtung zu dem ersten Fahrkorb lassen sich Ersatzfunktionen für den ersten Fahrkorb aufgrund der geringen Distanz zwischen Hilfseinrichtung und Fahrkorb verbessert bereitstellen.

Gemäß einer besonders vorteilhaften Ausgestaltungsvariante der Erfindung weist die Aufzuganlage wenigstens einen zweiten Fahrkorb auf, wobei ein solcher zweiter Fahrkorb dem ersten Fahrkorb als Hilfseinrichtung zugeordnet wird. Bei dieser Ausgestaltungsvariante dient somit vorteilhafterweise ein voll funktionsfähiger Fahrkorb als Hilfseinrichtung für einen defekten oder nicht voll funktionsfähigen Fahrkorb. Vorteilhafterweise wird dabei ein solcher zweiter Fahrkorb als Hilfseinrichtung für einen ersten Fahrkorb zugeordnet, der bestimmte Kriterien erfüllt. Vorteilhafte Kriterien hierfür sind, dass der zweite Fahrkorb zumindest zum Zeitpunkt der Zuordnung als Hilfseinrichtung keine Personen befördert und/oder dass der zweite Fahrkorb ein benachbarter Fahrkorb des ersten Fahrkorbs ist und/oder dass der zweite Fahrkorb über eine besondere technische Ausstattung verfügt. Es ist klar, dass der Fachmann weitere Kriterien für die Bestimmung eines zweiten Fahrkorbs als Hilfseinrichtung für einen ersten Fahrkorb vorsehen kann. Die Verwendung eines zweiten Fahrkorbs als Hilfseinrichtung für einen ersten Fahrkorb weist unter anderem den Vorteil auf, dass keine spezielle Hilfseinrichtung seitens der Aufzuganlage vorgehalten werden muss. Von der Erfindung umfasst sind aber insbesondere auch Ausgestaltungsvarianten bei der ergänzend zu einem zweiten Fahrkorb als Hilfseinrichtung für einen ersten Fahrkorb ergänzend oder ausschließlich speziell konstruierte Hilfseinrichtungen vorgesehen sind, die nicht zum normalen Personentransport geeignet sind und somit eine deutlich geringere Größe aufweisen, als ein Fahrkorb. Bei einer Ausgestaltungsvariante einer Hilfseinrichtung, die nicht zum normalen Personentransport vorgesehen ist, kann allerdings vorgesehen sein, dass zumindest eine besonders geschulte Fachkraft, wie ein Aufzugmonteur, mittels der Hilfseinrichtung innerhalb des Schachtsystems befördert werden kann. Vorzugsweise weist die Hilfseinrichtung dabei keine Kabine sondern lediglich einen Rahmen auf, innerhalb dessen der Monteur sich aufhalten kann.

Bei der Ausgestaltungsvariante der Erfindung, bei der ein zweiter Fahrkorb als Hilfseinrichtung einem ersten Fahrkorb zugeordnet werden kann, ist es besonders bevorzugt vorgesehen, dass ein erster zweiter Fahrkorb als erste Hilfseinrichtung von einer ersten Seite an den ersten Fahrkorb verfahren wird und/oder ein zweiter zweiter Fahrkorb als zweite Hilfseinrichtung von einer zweiten Seite, welcher der ersten Seite gegenüberliegt, an den ersten Fahrkorb verfahren wird. Wird ein erster zweiter Fahrkorb in einem vertikalen Schacht des Schachtsystems der Aufzuganlage beispielsweise als erste Hilfseinrichtung von unten an den ersten Fahrkorb verfahren, ist es insbesondere vorgesehen, dass dieser erste zweite Fahrkorb beim Verfahren nach oben den ersten Fahrkorb nach oben schieben kann und/oder bei einem Verfahren nach unten den ersten Fahrkorb mit nach unten absenken kann. Wird ein erster zweiter Fahrkorb in einem vertikalen Schacht des Schachtsystems der Aufzuganlage beispielsweise als erste Hilfseinrichtung von oben an den ersten Fahrkorb verfahren, ist es insbesondere vorgesehen, dass dieser erste zweite Fahrkorb beim Verfahren nach oben den ersten Fahrkorb nach oben schleppen kann. Insbesondere wenn sich der erste Fahrkorb in einem horizontalen Schacht der Aufzuganlage befindet, ist vorgesehen, dass ein erster zweiter Fahrkorb als erste Hilfseinrichtung von der linken Seite an den ersten Fahrkorb verfahren wird und ein zweiter zweiter Fahrkorb als zweite Hilfseinrichtung von der rechten Seite an den ersten Fahrkorb verfahren wird, sodass der erste Fahrkorb mittels des ersten zweiten Fahrkorbs nach rechts verfahren beziehungsweise verschoben werden kann und mittels des zweiten zweiten Fahrkorbs nach links verfahren beziehungsweise verschoben werden kann.

Als Ausgestaltungsvariante ist insbesondere für horizontale Schächte des Schachtsystems vorgesehen, dass die wenigstens eine Hilfseinrichtung vorteilhaferweise eine Vorrichtung ist, mittels der ein in dem horizontalen Schacht befindlicher erster Fahrkorb aus dem horizontalen Schacht gezogen oder geschoben wird.

Vorteilhafterweise wird eine mechanische Verbindung zwischen dem ersten Fahrkorb und der wenigstens einen Hilfseinrichtung hergestellt. Diese mechanische Verbindung ist vorteilhafterweise geeignet, bei einem Verfahren des ersten Fahrkorbs entstehende Kräfte zu halten. Das heißt insbesondere, dass die hergestellte mechanische Verbindung dazu ausgebildet ist, dass die wenigstens eine Hilfseinrichtung den ersten Fahrkorb schleppen und/oder schieben kann. Die mechanische Verbindung, die zwischen der wenigstens einen Hilfseinrichtung und dem ersten Fahrkorb hergestellt wird, ist dabei eine wieder lösbare Verbindung. Die mechanische Verbindung wird dabei vorteilhafterweise nur so lange bereitgestellt, bis eine Bereitstellung einer Ersatzfunktion nicht mehr erforderlich ist, beispielsweise weil der erste Fahrkorb außerhalb der Verkehrswege der weiteren Fahrkörbe mittels der wenigstens einen Hilfseinrichtung verbracht wurde. Insbesondere kann vorgesehen sein, dass zur Herstellung der mechanischen Verbindung die wenigstens eine Hilfseinrichtung entsprechende Haken- oder Greifelemente aufweist und die Fahrkörbe, insbesondere der erste Fahrkorb, entsprechend komplementär ausgebildete Elemente, die mit den Hakenbeziehungsweise Greifelemente hintergriffen werden können, aufweisen.

Gemäß einer weiteren vorteilhaften Ausgestaltung der Erfindung weisen die Fahrkörbe der Aufzuganlage jeweils als eine Funktionskomponente eine Antriebseinheit auf, mittels welcher die Fahrkörbe jeweils eigenständig in dem Schachtsystem verfahren werden können, wobei die von der wenigstens einen Hilfseinrichtung bereitgestellte Ersatzfunktion die Antriebsfunktion der Antriebseinheit des ersten Fahrkorbs ersetzt. Ist also beispielsweise die Antriebseinheit des ersten Fahrkorbs ausgefallen, sodass sich dieser nicht mehr verfahren lässt, ist vorteilhafterweise vorgesehen, dass wenigstens eine Hilfseinrichtung zu diesem ersten Fahrkorb verfahren wird. Vorzugsweise wird dann zumindest eine mechanische Verbindung zwischen der wenigstens einen Hilfseinrichtung und dem ersten Fahrkorb hergestellt. Durch ein Verfahren der wenigstens einen Hilfseinrichtung wird dann der erste Fahrkorb mit verfahren, indem die wenigstens eine Hilfseinrichtung den ersten Fahrkorb mit sich schleppt beziehungsweise schiebt.

Als besonders vorteilhaft wird es daher angesehen, dass die Fahrkörbe der Aufzuganlage jeweils als eine Funktionskomponente eine Antriebseinheit aufweisen, mittels welcher die Fahrkörbe jeweils eigenständig beziehungsweise individuell in dem Schachtsystem verfahren werden können, wobei die von der wenigstens einen Hilfseinrichtung bereitgestellte Ersatzfunktion die Antriebsfunktion der Antriebseinheit des ersten Fahrkorbs ersetzt, indem unter Nutzung der mechanischen Verbindung zwischen der wenigstens einen Hilfseinrichtung und dem ersten Fahrkorb der erste Fahrkorb durch ein Verfahren der wenigstens einen Hilfseinrichtung in dem Schachtsystem verfahren wird. Gemäß einer weiteren vorteilhaften Ausgestaltung wird in Abhängigkeit der Beladung des ersten Fahrkorbs entschieden, ob dem ersten Fahrkorb eine Hilfseinrichtung oder mehrere Hilfseinrichtungen zugeordnet werden. Ist der erste Fahrkorb unbeladen, so wird dem ersten Fahrkorb vorteilhafterweise nur eine Hilfseinrichtung zugeordnet. Darüber hinaus kann in Abhängigkeit der Beladung des ersten Fahrkorbs entschieden werden, ob eine Hilfseinrichtung von oben oder von unten oder von beiden Seiten an den ersten Fahrkorb verfahren werden. Insbesondere wenn der erste Fahrkorb voll beladen ist, werden vorteilhafterweise von beiden Seiten Hilfseinrichtungen an den ersten Fahrkorb verfahren.

Gemäß einer weiteren besonders vorteilhaften Ausgestaltung der Erfindung ist vorgesehen, dass eine elektrisch leitende Verbindung zwischen dem ersten Fahrkorb und der wenigstens einen Hilfseinrichtung hergestellt wird, wobei über die hergestellte elektrisch leitende Verbindung für den ersten Fahrkorb eine Stromversorgung bereitgestellt wird. Über die wenigstens eine Hilfseinrichtung ist es somit vorteilhafterweise möglich, den ersten Fahrkorb mit Energie zu versorgen. Dazu kann vorgesehen sein, dass die wenigstens eine Hilfseinrichtung eine Batterie und/oder einen Akkumulator aufweist, vorzugsweise eine Mehrzahl von Lithium-Ionen-Zellen, wie sie beispielsweise auch in der Elektromobilität bei Hybrid- oder Elektrofahrzeugen eingesetzt werden. Alternativ oder ergänzend dazu ist vorgesehen, dass die Hilfseinrichtung über einen Anschluss an ein Stromnetz verfügt und die Anbindung an dieses Stromnetz bereitstellt. Können Funktionen des ersten Fahrkorbs nicht realisiert werden, weil seitens des ersten Fahrkorbs keine Energie hierfür bereitgestellt werden kann, so kann diese Energie vorteilhafterweise mittels der wenigstens einen Hilfseinrichtung bereitgestellt werden.

Bei einer weiteren vorteilhaften Ausgestaltungsvariante der Erfindung weisen die Fahrkörbe der Aufzuganlage jeweils als eine Funktionskomponente eine Stromversorgung auf. Über diese Stromversorgung werden die Fahrkörbe jeweils mit der benötigten elektrischer Energie versorgt, wobei die von der wenigstens einen Hilfseinrichtung bereitgestellte Ersatzfunktion die Funktion der Energiebereitstellung der Stromversorgung des ersten Fahrkorbs ersetzt. Ein solches Ersetzen der Funktion der Energiebereitstellung der Stromversorgung des ersten Fahrkorbs ist dabei insbesondere dann vorgesehen, wenn ein Defekt oder eine Fehlfunktion bezüglich der Stromversorgung des ersten Fahrkorbs aufgetreten ist.

Gemäß einer weiteren besonders vorteilhaften Ausgestaltung der Erfindung ist vorgesehen, dass eine Kommunikationsverbindung zur Übertragung von Daten zwischen dem ersten Fahrkorb und der wenigstens einen Hilfseinrichtung hergestellt wird. Insbesondere ist vorgesehen, unter Nutzung dieser Kommunikationsverbindung Daten zwischen dem ersten Fahrkorb und der wenigstens einen Hilfseinrichtung zu übertragen, um mittels einer seitens der wenigstens einen Hilfseinrichtung bereitgestellten Diagnoseeinheit festzustellen, welche Funktion des ersten Fahrkorbs nicht ordnungsgemäß funktioniert und daher durch eine seitens der wenigstens einen Hilfseinrichtung bereitgestellte Ersatzfunktion ersetzt werden soll. Weiter ist insbesondere vorgesehen, über die zwischen dem ersten Fahrkorb und der wenigstens einen Hilfseinrichtung hergestellte Kommunikationsverbindung Steuerungsbefehle an den ersten Fahrkorb zu übertragen, um Funktionen des ersten Fahrkorbs zu steuern. Weiter ist insbesondere vorgesehen, über die zwischen dem ersten Fahrkorb und der wenigstens einen Hilfseinrichtung hergestellte Kommunikationsverbindung seitens des ersten Fahrkorbs, insbesondere seitens Sensoreinheiten des ersten Fahrkorbs, erfasste Betriebsparameter von dem ersten Fahrkorb an die wenigstens eine Hilfseinrichtung zu übertragen. Diese Betriebsparameter können dann insbesondere an eine Steuereinheit und/oder die Gruppensteuerung der Aufzuganlage weitergeleitet werden, insbesondere damit die Aufzuganlage unter Nutzung der bereitgestellten Ersatzfunktion weiter betrieben werden kann.

Insbesondere ist weiter vorgesehen, dass über die Kommunikationsverbindung Funktionskomponenten des ersten Fahrkorbs gesteuert werden, insbesondere eine Bremse des ersten Fahrkorbs und/oder ein Tür des ersten Fahrkorbs und/oder eine Anzeige des ersten Fahrkorbs und/oder ein Lautsprecher des ersten Fahrkorbs und/oder eine Beleuchtung des ersten Fahrkorbs und/oder eine Sprechanlage des ersten Fahrkorbs und/oder eine Diagnoseeinrichtung des ersten Fahrkorbs. Vorteilhafterweise werden die Steuerbefehle dabei von der wenigstens einen Hilfseinrichtung an den ersten Fahrkorb übertragen.

Bei einer weiteren vorteilhaften Ausgestaltung der Erfindung weisen die Fahrkörbe der Aufzuganlage jeweils als eine Funktionskomponente eine Kommunikationsschnittstelle zum Senden und/oder Empfangen von Daten auf. Über diese Kommunikationsschnittstelle senden und/oder empfangen die Fahrkörbe jeweils insbesondere Daten hinsichtlich des Betriebs der Aufzuganlage, wobei die von der wenigstens einen Hilfseinrichtung bereitgestellte Ersatzfunktion die Funktion des Sendens und/oder Empfangens von Daten mittels der Kommunikationsschnittstelle des ersten Fahrkorbs ersetzt. Somit kann der erste Fahrkorb in dem Sonderbetriebsmodus vorteilhafterweise auch dann Daten Senden und/oder Empfangen, wenn die Kommunikationsschnittstelle des ersten Fahrkorbs defekt ist oder zumindest nicht ordnungsgemäß funktioniert.

Gemäß einer vorteilhaften weiteren Ausgestaltung der Erfindung weisen die Fahrkörbe der Aufzuganlage jeweils eine eigene Steuereinheit auf, wobei diese Steuereinheiten zusammen zumindest einen Teil des Steuerungssystems der Aufzugsanlage bilden, insbesondere als Teil einer Gruppensteuerung, und das Verfahren der Fahrkörbe in dem Schachtsystem steuern, wobei die von der wenigstens einen Hilfseinrichtung bereitgestellte Ersatzfunktion die Funktion des Steuerns mittels der Steuereinheit des ersten Fahrkorbs ersetzt. Selbst bei einem Ausfall der Steuereinheit des ersten Fahrkorbs kann der erste Fahrkorb somit vorteilhafterweise unter Nutzung der diesem ersten Fahrkorb zugeordneten wenigstens einen Hilfseinrichtung weiter gesteuert werden.

Insbesondere sieht die Erfindung weiter vor, dass von einem Normalbetriebsmodus der Aufzuganlage in den Sonderbetriebsmodus gewechselt wird, wenn bezüglich eines ersten Fahrkorbs ein Defekt erkannt wird. Ein Normalbetriebsmodus bezeichnet dabei insbesondere den fehlerfreien Betrieb einer Aufzuganlage, also wenn die Fahrkörbe der Aufzuganlage, wie von der Steuerung vorgesehen, verfahren werden können, um Personen zwischen Stockwerken befördern zu können. Tritt während eines solchen Normalbetriebsmodus ein Fehler auf, der seitens der Aufzuganlage oder einer Komponente der Aufzuganlage erkannt wird, so ist vorteilhafterweise vorgesehen, dass die Aufzuganlage von dem Normalbetriebsmodus in den Sonderbetriebsmodus wechselt. Vorteilhafterweise wird in dem Sonderbetriebsmodus zumindest ein Teil der Fahrkörbe weiter wie in dem Normalbetriebsmodus verfahren, zumindest solange diese Fahrkörbe nicht durch den von der Störung betroffenen Fahrkorb oder die von der Störung betroffenen Fahrkörbe behindert werden. Als vorteilhafte Ausgestaltungsvariante ist auch insbesondere vorgesehen, zumindest die Fahrkörbe, die innerhalb desselben Schachtes verkehren wie der erste Fahrkorb, also der von einer Störung betroffene Fahrkorb, so lange außer Betrieb zu setzen, bis die wenigstens eine Hilfseinrichtung dem ersten Fahrkorb zugeordnet ist und die wenigstens eine Hilfseinrichtung für den ersten Fahrkorb eine für den weiteren Betrieb des ersten Fahrkorbs benötigte Ersatzfunktion beziehungsweise die für den weiteren Betrieb des ersten Fahrkorbs benötigten Ersatzfunktionen bereitgestellt hat. Erst danach werden auch die außer Betrieb gesetzten Fahrkörbe weiter betrieben.

Als eine weitere vorteilhafte Ausgestaltung des erfindungsgemäßen Verfahrens ist vorgesehen, dass bei einem Erkennen eines Defekts bezüglich eines ersten Fahrkorbs der Aufzuganlage eine Bremse dieses ersten Fahrkorbs ausgelöst wird. Vorteilhafterweise erfolgt das Auslösen der Bremse derart, dass der erste Fahrkorb durch das Auslösen der Bremse gebremst wird und in einer fixen Position in dem Schachtsystem gehalten wird. Falls dieser erste Fahrkorb bereits steht, ist selbstverständlich, dass dieser Fahrkorb beim Auslösen der Bremse nicht mehr abgebremst wird sondern lediglich in der fixen Position in dem Schachtsystem gehalten wird.

Als vorteilhafte Weiterbildung dieser Ausgestaltung des erfindungsgemäßen Verfahrens ist, insbesondere wenn sich der erste Fahrkorb in einem senkrechten Schacht befindet, vorgesehen, dass die wenigstens eine Hilfseinrichtung mit dem ersten Fahrkorb, der durch das Auslösen der Bremse in der fixen Position in dem Schachtsystem gehalten wird, mechanisch verbunden wird. Vorteilhafterweise wird die wenigstens eine Hilfseinrichtung hierzu an den ersten Fahrkorb angekoppelt, beispielsweise wie in der JP 2004250186 A beschrieben. Nach der erfolgten mechanischen Kopplung der wenigstens einen Hilfseinrichtung an den ersten Fahrkorb ist insbesondere weiter vorgesehen, dass die Bremse des ersten Fahrkorbs gelöst wird, sodass das Gewicht des ersten Fahrkorbs von der wenigstens einen Hilfseinrichtung aufgenommen wird. Die wenigstens eine Hilfseinrichtung trägt beziehungsweise hält dabei vorteilhafterweise den ersten Fahrkorb. Dann wird der erste Fahrkorb vorteilhafterweise mittels der wenigstens einen Hilfseinrichtung in eine Haltestelle der Aufzuganlage verfahren. Der erste Fahrkorb wird hierbei quasi durch die wenigstens eine Hilfseinrichtung abgeschleppt. In der Haltestelle wird vorteilhafterweise eine Tür des ersten Fahrkorbs geöffnet, insbesondere um in dem ersten Fahrkorb befindlichen Personen ein Aussteigen aus dem ersten Fahrkorb zu ermöglichen. Für das Öffnen der Tür oder der Türen des ersten Fahrkorbs kann insbesondere wiederum eine Ersatzfunktion seitens der wenigstens einen Hilfseinrichtung bereitgestellt werden.

Vorteilhafterweise wird die geöffnete Tür des ersten Fahrkorbs nach dem Öffnen wieder geschlossen, insbesondere wenn detektiert wurde, dass sich keine Personen mehr in dem ersten Fahrkorb befinden. Das Detektieren kann dabei insbesondere mittels einer Lastmesseinrichtung des ersten Fahrkorbs erfolgen und/oder mittels einer seitens der wenigstens einen Hilfseinrichtung als Ersatzfunktion bereitgestellten Lastmesseinrichtung. Nach dem Schließen der Tür des ersten Fahrkorbs wird dieser erste Fahrkorb vorteilhafterweise mittels der wenigstens einen Hilfseinrichtung in einen außerhalb der Verkehrswege der Fahrkörbe gelegenen Depotbereich der Aufzuganlage verfahren. Ein solcher Depotbereich kann insbesondere ein Schacht oder ein Schachtabschnitt des Schachtsystems der Aufzuganlage sein, über den keine Stockwerke angefahren werden. Vorteilhafterweise werden die von der Störung nicht betroffenen Fahrkörbe der Aufzuganlage nach dem Verfahren des ersten Fahrkorbs in den Depotbereich durch den ersten Fahrkorb nicht mehr beim Anfahren von Haltestellen behindert.

Eine weitere vorteilhafte Weiterbildung der Erfindung sieht vor, dass zusätzlich zu der mechanischen Verbindung zwischen dem ersten Fahrkorb und der wenigstens einen Hilfseinrichtung eine elektrisch leitende Verbindung und eine Kommunikationsverbindung hergestellt werden. Dabei wird vorteilhafterweise über die elektrisch leitende Verbindung seitens der wenigstens einen Hilfseinrichtung elektrische Energie für den ersten Fahrkorb bereitgestellt, insbesondere damit Energie benötigende intakte Funktionskomponenten des ersten Fahrkorbs weiter betrieben werden können. Über die Kommunikationsverbindung werden vorteilhafterweise Bremssteuerungsbefehle zum Steuern der Bremse des ersten Fahrkorbs gesendet, insbesondere Bremssteuerungsbefehle zum Lösen der Bremse vor dem Verfahren zu der Haltestelle und zum Betätigen der Bremse in der Haltestelle und zum erneuten Lösen der Bremse zum weiteren Verfahren des ersten Fahrkorbs in den Depotbereich. Die Bremse des ersten Fahrkorbs wird dabei vorteilhafterweise entsprechend der empfangenen Bremssteuerungsbefehle gesteuert.

Vorteilhafterweise werden über die Kommunikationsverbindung auch Türensteuerungsbefehle zum Steuern der Türen des ersten Fahrkorbs gesendet, insbesondere Türensteuerungsbefehle zum Öffnen der Türen in der Haltestelle und zum Schließen der Türen vor dem Verfahren des ersten Fahrkorbs aus der Haltestelle. Der Türensteuerungsbefehl zum Schließen der Türen des ersten Fahrkorbs in der Haltestelle wird vorzugsweise allerding nur dann gesendet, wenn detektiert wurde, dass sich keine Personen mehr in dem ersten Fahrkorb befinden. Die Türen des ersten Fahrkorbs werden dabei vorteilhafterweise entsprechend den empfangenen Türensteuerungsbefehlen gesteuert.

Gemäß einer weiteren vorteilhaften Ausgestaltung der Erfindung wird der erste Fahrkorb unter Nutzung der seitens der wenigstens einen Hilfseinrichtung bereitgestellten Ersatzfunktion in einen außerhalb von Verkehrswegen der Fahrkörbe gelegenen Depotbereich verfahren. Vorteilhafterweise wird nach dem Verfahren des ersten Fahrkorbs in den Depotbereich die Aufzuganlage bezüglich der weiteren Fahrkörbe von dem Sonderbetriebsmodus in einen Normalbetriebsmodus verbracht. Der Sonderbetriebsmodus ist damit vorteilhafterweise so lange beendet, bis erneut eine Störung bezüglich eines weiteren ersten Fahrkorbs detektiert wird. Dann wird wiederum von dem Normalbetriebsmodus in den Sonderbetriebsmodus gewechselt.

Die zur Lösung der eingangs genannten Aufgabe des Weiteren vorgeschlagene Aufzuganlage ist eine zur Ausführung des erfindungsgemäßen Verfahrens und/oder zur Ausführung der Ausgestaltungsvarianten und Weiterbildungen des erfindungsgemäßen Verfahrens ausgebildete Aufzugsanlage nach Anspruch 15.

Weitere vorteilhafte Einzelheiten, Merkmale und Ausgestaltungsdetails der Erfindung werden im Zusammenhang mit den in den Figuren dargestellten Ausführungsbeispielen näher erläutert. Dabei zeigt:
- Fig. 1: in einer vereinfachten schematischen Darstellung ein Ausführungsbeispiel für eine erfindungsgemäß ausgebildete und betriebene Aufzuganlage in einem Normalbetriebsmodus;
- Fig. 2: in einer vereinfachten schematischen Darstellung ein Ausführungsbeispiel für eine erfindungsgemäß ausgebildete und betriebene Aufzuganlage in einem Sonderbetriebsmodus;
- Fig. 3: in einer vereinfachten schematischen Darstellung ein weiteres Ausführungsbeispiel für eine erfindungsgemäß ausgebildete und betriebene Aufzuganlage in einem Sonderbetriebsmodus;
- Fig. 4: in einer vereinfachten schematischen Darstellung einen Ausschnitt eines Ausführungsbeispiels für eine erfindungsgemäß ausgebildete Aufzuganlage zur Erläuterung von ersten Verfahrensschritten eines Ausführungsbeispiels eines erfindungsgemäßen Verfahrens;
- Fig. 5: in einer vereinfachten schematischen Darstellung einen Ausschnitt eines Ausführungsbeispiels für eine erfindungsgemäß ausgebildete Aufzuganlage zur Erläuterung von weiteren Verfahrensschritten eines Ausführungsbeispiels eines erfindungsgemäßen Verfahrens;
- Fig. 6: in einer vereinfachten schematischen Darstellung einen Ausschnitt eines Ausführungsbeispiels für eine erfindungsgemäß ausgebildete Aufzuganlage zur Erläuterung von weiteren Verfahrensschritten eines Ausführungsbeispiels eines erfindungsgemäßen Verfahrens; und
- Fig. 7: in einer vereinfachten schematischen Darstellung einen Ausschnitt eines Ausführungsbeispiels für eine erfindungsgemäß ausgebildete Aufzuganlage zur Erläuterung von weiteren Verfahrensschritten eines Ausführungsbeispiels eines erfindungsgemäßen Verfahrens.

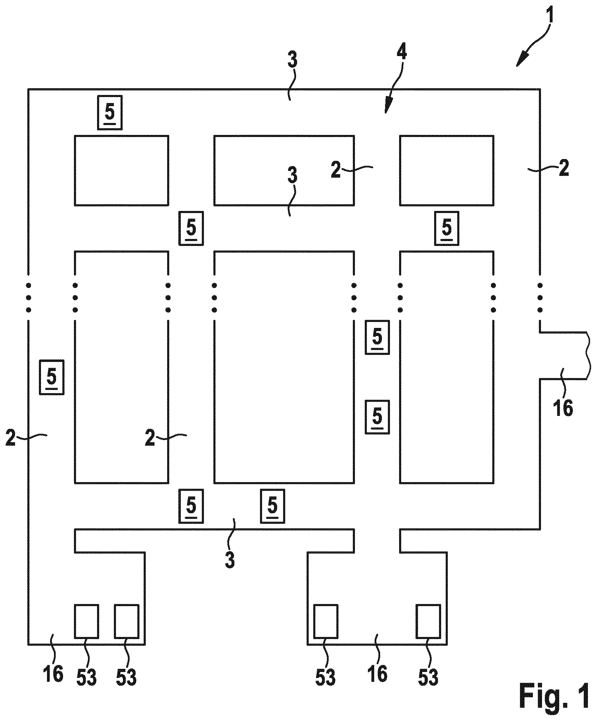

In Fig. 1 bis Fig. 3 ist ein Ausführungsbeispiel für eine erfindungsgemäß ausgebildete Aufzuganlage 1 dargestellt. Die senkrechten untereinander angeordneten Punkte stellen dabei symbolisch dar, dass die Aufzuganlage 1 tatsächlich wesentlich größer, insbesondere wesentlich höher, ausgebildet ist, beispielsweise für den Einsatz in Hochhäusern oder Wolkenkratzern.

Die in Fig. 1 bis Fig. 3 jeweils dargestellte Aufzuganlage 1 umfasst ein Schachtsystem 4 mit einer Vielzahl von vertikalen Aufzugschächten 2 und horizontalen Aufzugschächten 3. Darüber hinaus umfasst die Aufzuganlage 1 eine Mehrzahl von Fahrkörben 5, welche innerhalb des Schachtsystems 4 verfahren werden können. Dabei ist insbesondere vorgesehen, dass die Aufzuganlage 1 eine mittels Linearmotoren betriebene Aufzuganlage ist. Die Fahrkörbe 5 werden dabei vorteilhafterweise durch ein magnetisches Wanderfeld entlang von Schienen angetrieben, wozu die Fahrkörbe jeweils eine eigene Antriebseinheit (in Fig. 1 bis Fig. 3 nicht explizit dargestellt) aufweisen. Die Fahrkörbe 5 der Aufzuganlage 1 können dabei unter Nutzung ihrer jeweiligen Antriebseinheit vorteilhafterweise individuell in den vertikalen Schächten 2 und den horizontalen Schächten 3 verfahren werden. Damit ein Fahrkorb 5 von einem vertikalen Schacht 2 in einem horizontalen Schacht 3 oder von einem horizontalen Schacht 3 in einen vertikalen Schacht 2 wechseln kann, sind vorteilhafterweise entsprechende Exchanger-Einheiten (in Fig. 1 bis Fig. 3 nicht explizit dargestellt) vorgesehen. Insbesondere können solche Exchanger-Einheiten verdrehbare Schienenabschnitte sein, die durch eine Rotation um 90° einem in der Exchanger-Einheit befindlichen Fahrkorb einen Richtungswechsel um 90° ermöglichen.

Neben den Schächten 2, 3, in denen die Fahrkörbe 5 zur Beförderung von Personen zwischen unterschiedlichen Stockwerken verfahren werden können, weist die Aufzuganlage 1 Depotbereiche 16 auf, in welchen defekte Fahrkörbe 5 oder aufgrund eines geringeren Verkehrsaufkommens nicht benötigte Fahrkörbe 5 geparkt werden können. In Fig. 1 sind beispielhaft vier geparkte Fahrkörbe 53 in den Depotbereichen 16 dargestellt.

Insbesondere kann die Aufzuganlage 1 eine Zielrufsteuerung aufweisen. Das heißt, dass ein Aufzugnutzer auf einem Ruftockwerk an einem Zielrufterminal oder über ein mobiles Endgerät das von ihm gewünschte Stockwerk eingibt, und seitens des Steuerungssystems der Aufzuganlage 1 ein Fahrkorb 5 bestimmt wird, der den Aufzugnutzer von dem Rufstockwerk zu dem gewählten Zielstockwerk befördert. Vorteilhafterweise weist dabei jeder Fahrkorb 5 eine eigene Steuereinheit (in Fig. 1 bis Fig. 3 nicht explizit dargestellt) auf. Die Steuereinheiten der Fahrkörbe 5 bilden dabei vorteilhafterweise zusammen ein dezentrales Steuerungssystem der Aufzuganlage 1.

In Fig. 1 ist dabei die Aufzuganlage 1 in einem Normalbetriebsmodus gezeigt. Das heißt, dass die Fahrkörbe 5 zur Bedienung von Rufen wie vorgesehen in dem Schachtsystem 4 verfahren werden können. Die Fahrkörbe 5 können dabei insbesondere Daten untereinander austauschen. Vorteilhafterweise kann durch diesen Datenaustausch jeweils ein im Hinblick auf diverse Kriterien, wie insbesondere Wartezeit des Aufzugnutzers bis zur Ankunft des Fahrkorb, Wartezeit des Aufzugnutzers bis zur Erreichung des von ihm gewählten Zielstockwerks, Energiebedarf der Aufzuganlage und/oder Belegung des bereitgestellten Fahrkorbs, ein optimaler Fahrkorb zur Beförderung von Personen bestimmt werden. Vorteilhafterweise kennt ein Fahrkorb 5 beziehungsweise dessen Steuereinheit dabei stets zumindest die aktuellen Betriebsparameter der unmittelbar benachbarten Fahrkörbe 5, wie insbesondere die aktuelle Position der benachbarten Fahrkörbe, die nächsten Stopps der benachbarten Fahrkörbe, die aktuelle Geschwindigkeit, mit der die benachbarten Fahrkörbe verfahren werden und/oder die aktuelle Beschleunigung, mit der die benachbarten Fahrkörbe beim Verfahren beschleunigt werden. Unter Berücksichtigung der Betriebsparameter benachbarter Fahrkörbe werden dabei vorteilhafterweise Kollisionen zwischen Fahrkörben verhindert.

Die Aufzuganlage 1 wechselt dabei insbesondere dann von dem Normalbetriebsmodus in einen Sonderbetriebsmodus, wenn in Bezug auf einen der Fahrkörbe 5 oder in Bezug auf mehrere der Fahrkörbe 5 eine Störung oder ein Fehler detektiert wird.

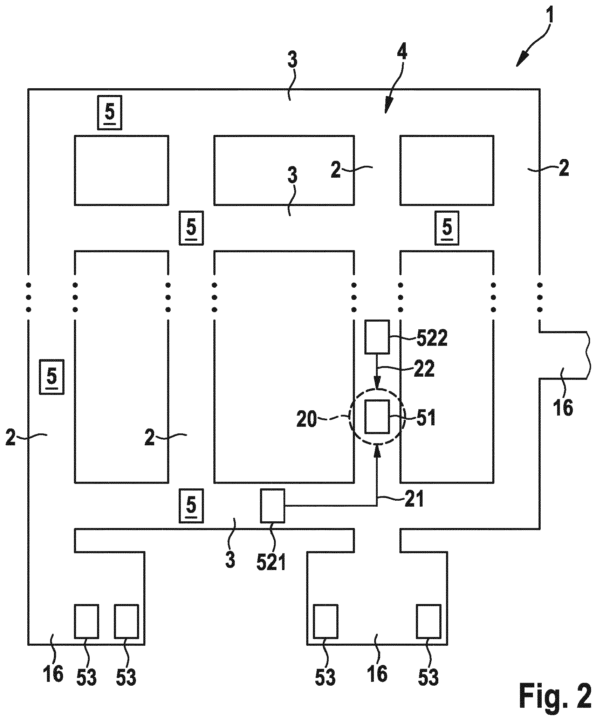

Dieser Fall ist beispielhaft in Fig. 2 dargestellt. Dort ist symbolisch durch einen Kreis 20 dargestellt, dass in Bezug auf einen ersten Fahrkorb 51 ein Fehler detektiert worden ist. Daraufhin wechselt die Aufzuganlage 1 von dem Normalbetriebsmodus in den Sonderbetriebsmodus.

In dem Sonderbetriebsmodus der Aufzuganlage 1 wird dem ersten Fahrkorb 51 ein erster zweiter Fahrkorb 521 und ein zweiter zweiter Fahrkorb 522 als Hilfseinrichtung zugeordnet. Der erste zweite Fahrkorb 521 wird dann von unten an den ersten Fahrkorb 51 verfahren, was in Fig. 2 symbolisch durch den Pfeil 21 dargestellt ist. Darüber hinaus wird der zweite zweite Fahrkorb 522 von oben an den ersten Fahrkorb 51 verfahren, was in Fig. 2 durch den Pfeil 22 symbolisch dargestellt ist.

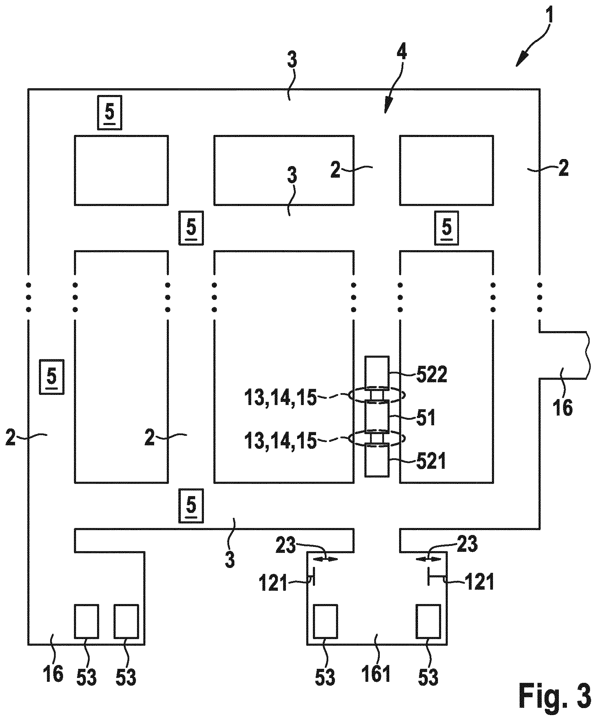

Haben der erste zweite Fahrkorb 521 und der zweite zweite Fahrkorb 522 den erster Fahrkorb 51 erreicht, so wird jeweils zwischen dem ersten Fahrkorb 51 und dem ersten zweiten Fahrkorb 521 sowie zwischen dem ersten Fahrkorb 51 und dem zweiten zweiten Fahrkorb 522 eine mechanische Verbindung 13, eine elektrisch leitende Verbindung 14 und eine Kommunikationsverbindung 15 hergestellt, was in Fig. 3 symbolisch durch die gestrichelten Ellipsen dargestellt ist.

Zur Herstellung der mechanischen Verbindung 13 ist insbesondere vorgesehen, dass jeweils Hakenpaare ineinandergreifen (in Fig. 3 nicht explizit dargestellt). In jedem Fall sind die mechanischen Verbindung 13 jeweils derart ausgebildet, dass die mechanischen Verbindungen 13 geeignet sind, das Gewicht der durch diese verbundenen Fahrkörbe 51, 521, 522 insbesondere auch beim Verfahren der Fahrkörbe 51, 521, 522 zu halten. Die elektrisch leitfähige Verbindung 14 und die Kommunikationsverbindung 15 zwischen den als Hilfseinrichtung fungierenden Fahrkörben 521, 522 und dem gestörten Fahrkorb 51 werden vorteilhafterweise über eine Steckverbindung hergestellt. Eine solche Steckverbindung kann insbesondere beim Herstellen der mechanischen Verbindung 13 mit realisiert werden. Als Ausgestaltungsvariante kann auch vorgesehen werden, die Kommunikationsverbindung 15 drahtlos herzustellen. Voraussetzung hierfür ist, dass die Fahrkörbe 5, 51, 521, 522 jeweils für eine drahtlose Kommunikation, beispielsweise über eine WLAN-Verbindung, ausgebildet sind.

Über die hergestellten Verbindungen 13, 14, 15 zwischen den Hilfseinrichtungen 521, 522 und dem gestörten Fahrkorb 51 stellen die Hilfseinrichtung 521 und Hilfseinrichtung 522 für den gestörten Fahrkorb 51 eine Ersatzfunktion für die von der Störung betroffenen Funktionen des Fahrkorbs 51 bereit. Die seitens der als Hilfseinrichtung fungierenden Fahrkörbe 521 und 522 bereitgestellten Ersatzfunktionen ersetzen dann die entsprechenden Funktionen des gestörten Fahrkorbs 51. Unter Nutzung der bereitgestellten Ersatzfunktionen wird die Aufzuganlage 1 dann weiter betrieben.

Insbesondere kann bei dem in Fig. 3 dargestellten Ausführungsbeispiel vorgesehen sein, dass der Fahrkorb 51 nicht mehr verfahren werden kann, weil dessen Antriebseinheit (in Fig. 3 nicht explizit dargestellt) beschädigt ist. Durch die als Hilfseinrichtung fungierenden Fahrkörbe 521, 522 wird dabei die Antriebsfunktion des Fahrkorbs 51 ersetzt. Dies erfolgt mittels der entsprechenden Antriebseinheiten der Fahrkörbe 521 und 522. Ist der Fahrkorb 51 leer, befinden sich also keine Personen in dem Fahrkorb 51, so ist vorgesehen, dass dieser mittels der Fahrkörbe 521 und 522, die den Fahrkorb 51 über die mechanische Verbindung 13 halten, in den Depotbereich 161 verfahren wird. Dort kann der Fahrkorb 51 geparkt und insbesondere auch repariert werden. In den Depotbereichen 16, 161 sowie insbesondere auch in den horizontalen Schächten 3 können darüber hinaus weitere Hilfseinrichtungen 121 vorgesehen sein. Bei diesen weiteren Hilfseinrichtungen 121 kann es sich insbesondere um in das Schachtsystem 4 eingebaute Zug- oder Druckmechanismen handeln. Die in Fig. 3 beispielhaft dargestellten weiteren Hilfseinrichtungen 121 sind dabei in die durch die Pfeile 23 symbolisierten Richtungen bewegbar und dabei ausgebildet, einen Fahrkorb 5 in horizontaler Richtung zu verschieben.

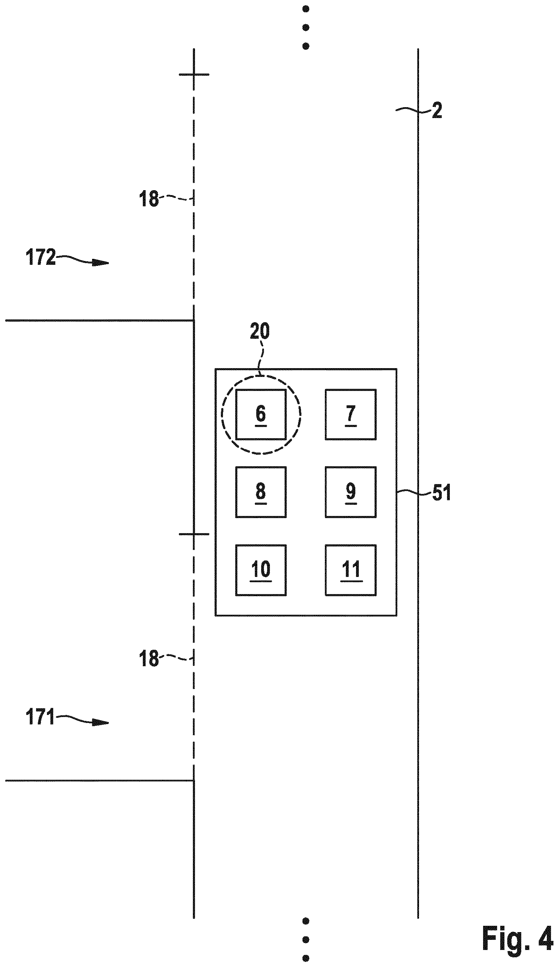

Unter Bezugnahme auf Fig. 4 bis Fig. 7 wird ein weiteres Ausführungsbeispiel für die vorliegende Erfindung beschrieben. Anhand von Fig. 4 bis Fig. 7 werden dabei unterschiedliche Verfahrensschritte weiter erläutert.

Dabei zeigen Fig. 4 bis Fig. 7 jeweils einen Ausschnitt aus einer Aufzuganlage, wie sie beispielsweise in Fig. 1 bis Fig. 3 dargestellt ist. Fig. 4 bis Fig. 7 zeigen dabei jeweils einen Abschnitt eines vertikalen Schachtes 2 der zwei Haltestellen 171 und 172 auf unterschiedlichen Stockwerken miteinander verbindet. Die Haltestellen 171 und 172 weisen dabei jeweils Schachttüren 18 (in Fig. 4 bis Fig. 7 jeweils durch gestrichelte Linien gekennzeichnet) auf, über welche Personen einen Fahrkorb betreten oder verlassen können.

Die Fahrkörbe 51 der ausschnittsweise in Fig. 4 bis Fig. 7 dargestellten Aufzuganlage weisen als Funktionskomponenten jeweils eine Antriebseinheit 6, eine Steuereinheit 7, eine Diagnoseeinheit 8, eine Lastmesseinheit 9 und eine Kommunikationsschnittstelle 10 auf, die in Fig. 4 bis Fig. 7 jeweils nur symbolisch dargestellt sind.

Beispielhaft ist in Fig. 4 ein erster Fahrkorb 51 dargestellt, bei dem in Bezug auf die Antriebseinheit 6 eine Störung detektiert wurde, was in Fig. 4 symbolisch durch den Kreis 20 dargestellt ist. Diese Störung wurde dabei seitens der Diagnoseeinheit 8 des Fahrkorbs 51 erkannt. Grundsätzlich ist auch denkbar, dass die Störung durch eine Diagnoseeinheit eines weiteren Fahrkorbs (in Fig. 4 nicht dargestellt) bei einem entsprechenden Austausch von Daten mit dem Fahrkorb 51 erkannt wird. Aufgrund der Störung der Antriebseinheit 6 des Fahrkorbs 51 sitzt der Fahrkorb 51 zwischen der Haltestelle 171 und der weiteren Haltestelle 172 der Aufzuganlage fest.

Das Erkennen der Störung an der Antriebseinheit 6 bewirkt dabei, dass die Aufzuganlage nun in einem Sonderbetriebsmodus betrieben wird. Die Diagnoseeinheit 8 des Fahrkorbs 51 bestimmt dabei, dass die Antriebsfunktion 6 des ersten Fahrkorbs 51 durch eine seitens einer Hilfseinrichtung bereitgestellte Ersatzfunktion ersetzt werden soll.

Ferner bewirkt das Erkennen der Störung an der Antriebseinheit 6, dass der Fahrkorb 51 mittels dessen Bremse (in Fig. 4 bis Fig. 7 nicht explizit dargestellt) gebremst und in einer fixen Position in dem Schacht 2 gehalten wird. Diese Situation ist in Fig. 4 dargestellt. Dem ersten Fahrkorb 51 wird nun eine Hilfseinrichtung zugeordnet.

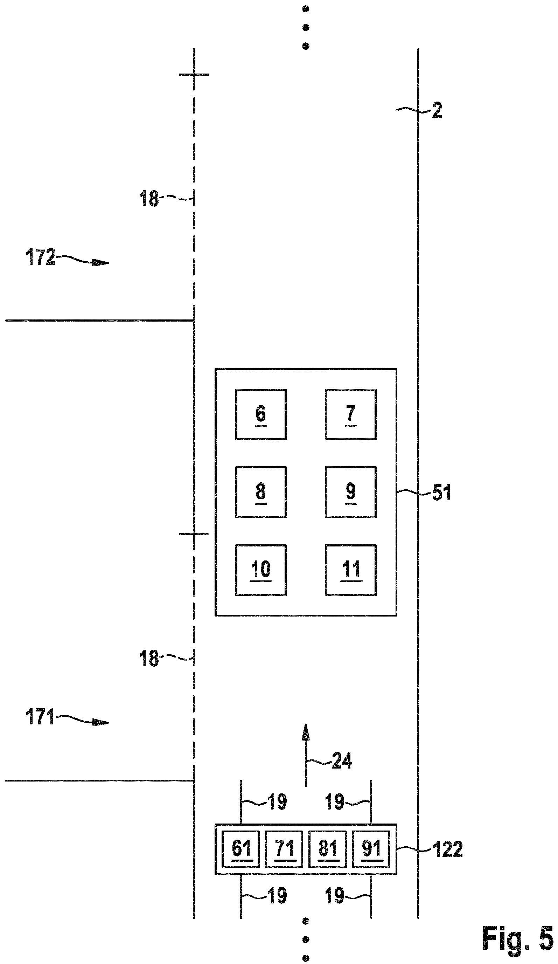

In Fig. 5 ist dabei dargestellt, dass dem Fahrkorb 51 die Hilfseinrichtung 122 zugeordnet wird. Diese Hilfseinrichtung 122 wird dazu zu dem Fahrkorb 51 verfahren, was in Fig. 5 symbolisch durch den Pfeil 24 dargestellt ist. Die Hilfseinrichtung 122 weist dabei eine eigene Antriebseinheit 61 auf, mittels der die Hilfseinrichtung 122 in dem Schachtsystem der Aufzuganlage verfahren werden kann. Ferner umfasst die Hilfseinrichtung 122 eine Steuereinheit 71, eine Diagnoseeinheit 81 sowie eine Lastmesseinheit 91 (in Fig. 5 bis Fig. 7 sind diese Einheiten jeweils nur symbolisch dargestellt). Insbesondere kann vorgesehen sein, dass die Hilfseinrichtung 122 darüber hinaus weitere Funktionen beziehungsweise weitere Einheiten zur Ausführung weiterer Funktionen umfasst, insbesondere Einheiten zur Ausführung sämtlicher Funktionen eines Fahrkorbs 51 der Aufzuganlage.

Die Hilfseinrichtung 122 ist in dem in Fig. 5 bis Fig. 7 dargestellten Ausführungsbeispiel als eine Art Plattform ausgebildet. Die Hilfseinrichtung 122 weist dabei Mittel 19 zur Herstellung einer Verbindung zu dem ersten Fahrkorb 51 auf. Die Mittel 19 der Hilfseinrichtung 122 sind dabei insbesondere zur Herstellung einer mechanischen Verbindung, einer Kommunikationsverbindung und einer elektrisch leitenden Verbindung zwischen der Hilfseinrichtung 122 und dem Fahrkorb 51 ausgebildet. Als Hilfseinrichtung kann anstelle der hier vorgeschlagenen Plattform allerdings auch wiederum ein weiterer Fahrkorb der Aufzuganlage eingesetzt werden.

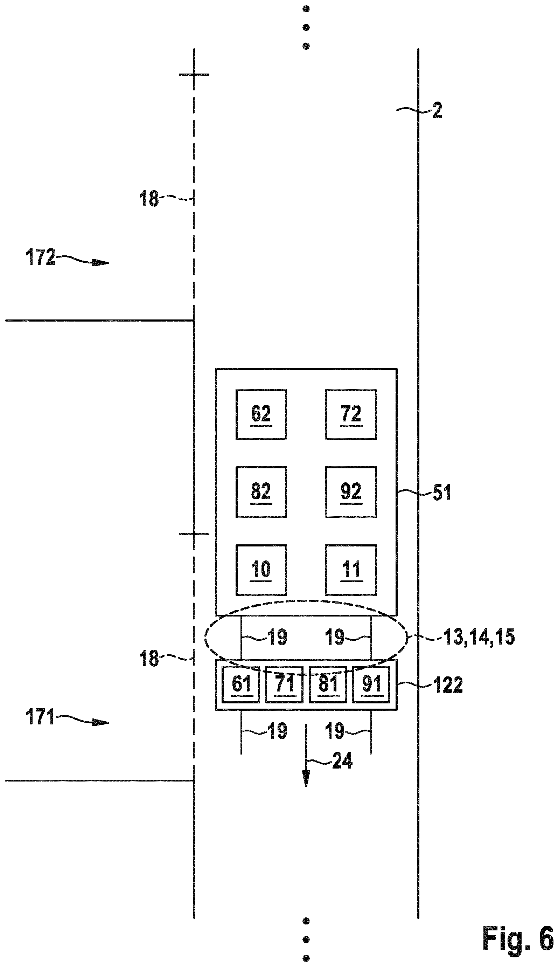

In Fig. 6 ist symbolisch dargestellt, wie die Hilfseinrichtung 122 an den erster Fahrkorb 51 herangefahren ist. Das Herstellen einer mechanischen Verbindung 13, einer elektrisch leitenden Verbindung 14 sowie einer Kommunikationsverbindung 15 zwischen der Hilfseinrichtung 122 und dem Fahrkorb 51 ist dabei symbolisch durch die gestrichelt dargestellte Ellipse symbolisiert. Die hergestellte mechanische Verbindung 13 zwischen der Hilfseinrichtung 122 und dem Fahrkorb 51 ist dabei geeignet, das Gewicht des Fahrkorbs 51, insbesondere auch das Gewicht des Fahrkorbs 51 wenn dieser beladen ist, zu tragen. Über die elektrisch leitende Verbindung 14 wird dem Fahrkorb 51 eine Stromversorgung bereitgestellt, sodass weiterhin funktionsfähige Funktionen des Fahrkorbs 51, beispielsweise das Kabinenlicht, weiter betrieben werden können. Hierdurch wird vorteilhafterweise verhindert, dass noch in dem Fahrkorb befindliche Personen durch einen längeren Ausfall des Kabinenlichts in Panik geraten.

Über die hergestellte Kommunikationsverbindung 15 zwischen der Hilfseinrichtung 122 und dem Fahrkorb 51 können insbesondere Daten, wie insbesondere Steuerungsbefehle, zwischen der Hilfseinrichtung 122 und dem Fahrkorb 51 übertragen werden.

Bei dem in Fig. 6 dargestellten Ausführungsbeispiel ist vorgesehen, dass die Diagnoseeinheit 81 der Hilfseinrichtung 122 bestimmt, dass sowohl die Funktion der Antriebseinheit 6 als auch die Funktion der Steuerung 7 als auch die Funktion der Diagnoseeinheit 8 als auch die Funktion der Lastmesseinheit 9 des Fahrkorbs 51 deaktiviert werden sollen. In Fig. 6 ist der Fahrkorb 51 daher mit deaktivierter Antriebseinheit 62, mit ganz oder teilweise deaktivierter Steuerung 72, mit ganz oder teilweise deaktivierter Diagnoseeinheit 82 und mit deaktivierter Lastmesseinheit 92 dargestellt. Diese durch diese Einheiten ausgeführten Funktionen werden dann durch entsprechende Ersatzfunktionen seitens der Hilfseinrichtung 122 ersetzt.

Nachdem die vorgenannten Funktionen des Fahrkorbs ganz oder teilweise deaktiviert wurden, sendet die Steuereinheit 71 der Hilfseinrichtung 122 einen Befehl an den Fahrkorb 51, die Bremse (in Fig. 6 nicht explizit dargestellt) des Fahrkorbs 51 zu lösen. Daraufhin öffnet die Bremse des Fahrkorbs 51, sodass das gesamte Gewicht des Fahrkorbs 51 von der Hilfseinrichtung 122 über die hergestellte mechanische Verbindung 13 getragen wird. Eine Positionsveränderung des Fahrkorbs 51 tritt dabei nicht ein. Dann wird die Hilfseinrichtung 122, die den Fahrkorb 51 trägt, nach unten zu der nächsten Haltestelle 171 verfahren, was in Fig. 6 symbolisch durch den Pfeil 24 dargestellt ist. Dabei kommuniziert die Steuereinheit 71 der Hilfseinrichtung 122 mit den anderen Fahrkörben (in Fig. 6 nicht dargestellt) der Aufzugsanlage und teilt insbesondere die aktuelle Position der Hilfseinrichtung 122 und des Fahrkorbs 51 mit, sodass insbesondere Kollisionen zwischen der Hilfseinrichtung 122 und anderen Fahrkörben der Aufzuganlage beziehungsweise zwischen dem Fahrkorb 51 und anderen Fahrkörben der Aufzuganlage verhindert werden.

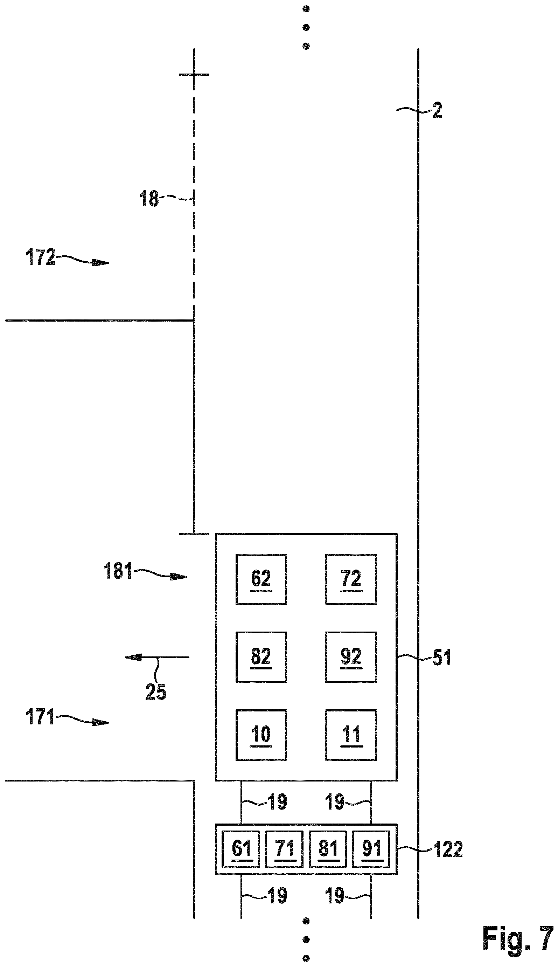

Ist die Hilfseinrichtung 122 unter Nutzung von deren Antriebseinheit 61, die mittels der Steuereinheit 71 der Hilfseinrichtung 122 gesteuert wird, derart in dem Aufzugschacht 2 verfahren worden, dass sich der erste Fahrkorb 51 in der Haltestelle 171 befindet, so sendet die Steuereinheit 71 einen Steuerungsbefehl an die Bremse des Fahrkorbs 51, sodass die Bremse auslöst und der Fahrkorb 51 von der Bremse in der Haltestelle 171 gehalten wird. Dann sendet die Steuereinheit 71 einen Steuerungsbefehl an die Tür (in Fig. 7 nicht explizit dargestellt) des Fahrkorbs 51, sodass sich die Tür des Fahrkorbs 51 zusammen mit der Schachttür 18 öffnet.

In Fig. 7 ist dabei beispielhaft dargestellt, dass die Schachttür 181 zusammen mit der Fahrkorbtür geöffnet ist. Der Pfeil 25 stellt dabei dar, dass in dem Fahrkorb 51 befindlichen Personen der Ausstieg aus dem Fahrkorb 51 in das der Haltestelle 171 zugeordnete Stockwerk ermöglicht ist. Insbesondere kann vorgesehen sein, dass die Steuereinheit 71 der Hilfseinrichtung 122 dabei eine Anzeige (in Fig. 7 nicht explizit dargestellt) in dem Fahrkorb 51 ansteuert, derart, dass auf der Anzeige eine Mitteilung erscheint, dass in dem Fahrkorb 51 befindliche Personen aussteigen müssen und der Fahrkorb 51 nicht für weitere Fahrten zu benutzen ist. Ferner wird vorteilhafterweise ein Lautsprecher (in Fig. 7 nicht explizit dargestellt) der Aufzugkabine 51 über die Steuereinheit 71 der Hilfseinrichtung 122 angesteuert, derart, dass darauf aufmerksam gemacht wird, dass dieser Fahrkorb 51 nicht von Personen zu betreten ist und nicht zu Beförderung von Personen bereitsteht.

Die Lastmesseinheit 91 der Hilfseinrichtung 122, die ausgebildet ist, über die mechanische Verbindung 13 zwischen der Hilfseinrichtung 122 und dem Fahrkorb 51 die Last des Fahrkorbs 51 zu bestimmen, insbesondere zu bestimmen, ob sich noch Personen in dem Fahrkorb 51 befinden, misst dabei die Last des Fahrkorbs 51. Stellt die Lastmesseinrichtung 91 fest, dass der Fahrkorb 51 leer ist, sich also keine Personen mehr in dem Fahrkorb 51 befinden, so sendet die Steuereinheit 71 der Hilfseinrichtung 122 einen weiteren Steuerungsbefehl an die Tür des Fahrkorbs 51, woraufhin die Tür des Fahrkorbs 51 wieder geschlossen wird.

Dann sendet die Steuereinheit 71 einen weiteren Steuerungsbefehl an dem Fahrkorb 51, der bewirkt, dass sich die Bremse des Fahrkorbs 51 löst. Dann wird der Fahrkorb 51 mittels der Hilfseinrichtung 122 in einen Depotbereich, wie beispielsweise in Fig. 1 bis Fig. 3 dargestellt, verfahren. In dem Depotbereich wird der Fahrkorb 51 geparkt. Vorteilhafterweise wird unter Nutzung der Diagnoseeinheit 81 der Hilfseinrichtung 122 dabei bereits eine Diagnose bezüglich des Defekts der Antriebseinheit 6 des Fahrkorbs 51 erstellt. Diese Fehlerdiagnose kann für eine spätere Reparatur auf der Anzeigeeinheit des Fahrkorbs angezeigt werden. Darüber hinaus kann die Diagnose über eine Sendeeinheit der Hilfseinrichtung 122 an eine zentrale Servicestelle, die für die Wartung der Aufzuganlage zuständig ist, gesendet werden.

Bis die von der Störung betroffene Antriebseinheit 6 wieder repariert beziehungsweise ausgetauscht ist und der Fahrkorb 51 somit wieder zu Beförderung von Personen eingesetzt werden kann, bleibt der Fahrkorb 51 vorteilhafterweise in dem Depotbereich geparkt. Die Hilfseinrichtung 122 ist hingegen bereits direkt nach dem Parken des Fahrkorbs 51 wieder einsatzbereit und kann bei Bedarf anderen einem anderen Fahrkorb zugeordnet werden.

Die in den Figuren dargestellten und im Zusammenhang mit diesen erläuterten Ausführungsbeispiele dienen der Erläuterung der Erfindung und sind für diese nicht beschränkend. Insbesondere sind Komponenten der Aufzuganlage nicht detailgetreu und nicht maßstabsgetreu dargestellt, sondern lediglich schematisch oder symbolisch zur Erläuterung der Erfindung.

### Bezugszeichenliste

- 1: Aufzuganlage
- 2: vertikaler Aufzugschacht
- 3: horizontaler Aufzugschacht
- 4: Schachtsystem
- 5: Fahrkorb
- 51: erster Fahrkorb
- 521: erster zweiter Fahrkorb
- 522: zweiter zweiter Fahrkorb
- 53: geparkter Fahrkorb
- 6: Antriebseinheit
- 61: Antriebseinheit (Hilfseinrichtung)
- 62: deaktivierte Antriebseinheit
- 7: Steuereinheit
- 71: Steuereinheit (Hilfseinrichtung)
- 72: deaktivierte Steuereinheit
- 8: Diagnoseeinheit
- 81: Diagnoseeinheit (Hilfseinrichtung)
- 82: deaktivierte Diagnoseeinheit
- 9: Lastmesseinheit
- 91: Lastmesseinheit (Hilfseinrichtung)
- 92: deaktivierte Lastmesseinheit
- 10: Kommunikationsschnittstelle
- 11: Stromversorgung
- 121: Hilfseinrichtung (erste Variante)
- 122: Hilfseinrichtung (zweite Variante)
- 13: mechanische Verbindung
- 14: Kommunikationsverbindung
- 15: elektrisch leitende Verbindung
- 16: Depot
- 161: Depot, in welches der erste Fahrkorb (51) verfahren wird
- 171: Haltestelle (Stockwerk x)
- 172: Haltestelle (Stockwerk y)
- 18: Schachttür
- 181: geöffnete Schachttür
- 19: Mittel zur Herstellung einer Verbindung (mechanische Verbindung, Kommunikationsverbindung, elektrisch leitende Verbindung)
- 20: Detektion eines Defekts
- 21: Verfahren des ersten zweiten Fahrkorbs (521)
- 22: Verfahren des zweiten zweiten Fahrkorbs (522)
- 23: Verfahren einer Hilfseinrichtung (erste Variante, 121)
- 24: Verfahren einer Hilfseinrichtung (zweite Variante, 122)
- 25: Ausstieg Personen

## Patentansprüche

1. Verfahren zum Betreiben einer Aufzuganlage (1), insbesondere einer mittels Linearmotoren betriebenen Aufzuganlage, wobei die Aufzuganlage (1) ein wenigstens einen vertikalen Aufzugschacht (2) umfassendes Schachtsystem (4) und eine Mehrzahl von Fahrkörben (5), welche jeweils mehrere Funktionskomponenten (6, 7, 8, 9) zur Ausführung unterschiedlicher Funktionen aufweisen, umfasst,
**wobei**
in einem Sonderbetriebsmodus der Aufzuganlage (1) einem ersten Fahrkorb (51) wenigstens eine Hilfseinrichtung (121, 122) zugeordnet wird,
wobei die wenigstens eine Hilfseinrichtung (121, 122) eine Ersatzfunktion für zumindest eine Funktion einer der Funktionskomponenten (6, 7, 8, 9) des ersten Fahrkorbs (51) bereitstellt,
durch die seitens der wenigstens einen Hilfseinrichtung (121, 122) bereitgestellte Ersatzfunktion die entsprechende zumindest eine Funktion einer Funktionskomponente (6, 7, 8, 9) des ersten Fahrkorbs (51) ersetzt wird, und
die Aufzuganlage (1) unter Nutzung der bereitgestellten Ersatzfunktion weiter betrieben wird;
**dadurch gekennzeichnet, dass** um den ersten Fahrkorb (51) ein Schutzbereich gebildet wird, in welchen nur die wenigstens eine Hilfseinrichtung (121, 122) verbracht werden darf, wobei die wenigstens eine Hilfseinrichtung (121, 122) unter Nutzung von Mitteln zur Überwachung des Abstands zu dem ersten Fahrkorb (51) zu dem ersten Fahrkorb (51) verbracht wird.

2. Verfahren nach Anspruch 1, **dadurch gekennzeichnet, dass** mittels einer Diagnoseeinheit (8) bestimmt wird, welche Funktion des ersten Fahrkorbs (51) durch die seitens der wenigstens einen Hilfseinrichtung (121, 122) bereitgestellte Ersatzfunktion ersetzt werden soll.

3. Verfahren nach einem der vorherigen Ansprüche, **dadurch gekennzeichnet, dass** die wenigstens eine Hilfseinrichtung (122) eine eigene Antriebseinheit (61) aufweist, mittels welcher die wenigstens eine dem ersten Fahrkorb (51) zugeordnete Hilfseinrichtung (122) über das Schachtsystem (4) zu dem ersten Fahrkorb (51) verfahren wird, wobei die Aufzuganlage (1) wenigstens einen zweiten Fahrkorb (521, 522) aufweist, wobei ein solcher zweiter Fahrkorb (521, 522) dem ersten Fahrkorb (51) als Hilfseinrichtung zugeordnet wird, wobei ein erster zweiter Fahrkorb (521) als erste Hilfseinrichtung von einer ersten Seite an den ersten Fahrkorb (51) verfahren wird und/oder ein zweiter zweiter Fahrkorb (522) als zweite Hilfseinrichtung von einer zweiten Seite, welcher der ersten Seite gegenüberliegt, an den ersten Fahrkorb (51) verfahren wird.

4. Verfahren nach einem der vorstehenden Ansprüche, **dadurch gekennzeichnet, dass** eine elektrisch leitende Verbindung (15) zwischen dem ersten Fahrkorb (51) und der wenigstens einen Hilfseinrichtung (122) hergestellt wird, wobei über die hergestellte elektrisch leitende Verbindung (15) für den ersten Fahrkorb (51) eine Stromversorgung bereitgestellt wird.

5. Verfahren nach Anspruch 4, **dadurch gekennzeichnet, dass** die Fahrkörbe (5) jeweils als eine Funktionskomponente eine Stromversorgung (11) aufweisen, über welche die Fahrkörbe (5) jeweils mit der benötigten elektrischer Energie versorgt werden, wobei die von der wenigstens einen Hilfseinrichtung (122) bereitgestellte Ersatzfunktion die Funktion der Energiebereitstellung der Stromversorgung (11) des ersten Fahrkorbs (51) ersetzt.

6. Verfahren nach einem der vorstehenden Ansprüche, **dadurch gekennzeichnet, dass** eine Kommunikationsverbindung (14) zur Übertragung von Daten zwischen dem ersten Fahrkorb (51) und der wenigstens einen Hilfseinrichtung (122) hergestellt wird.

7. Verfahren nach Anspruch 6, **dadurch gekennzeichnet, dass** über die Kommunikationsverbindung (14) Funktionskomponenten (6, 7, 8, 9) des ersten Fahrkorbs (51) gesteuert werden, insbesondere eine Bremse des ersten Fahrkorbs (51) und/oder ein Tür des ersten Fahrkorbs (51) und/oder eine Anzeige des ersten Fahrkorbs (51) und/oder ein Lautsprecher des ersten Fahrkorbs (51) und/oder eine Beleuchtung des ersten Fahrkorbs (51) und/oder eine Sprechanlage des ersten Fahrkorbs (51) und/oder eine Diagnoseeinrichtung (8) des ersten Fahrkorbs (51).

8. Verfahren nach einem der vorstehenden Ansprüche, **dadurch gekennzeichnet, dass** die Fahrkörbe (5) jeweils als eine Funktionskomponente eine Kommunikationsschnittstelle (10) zum Senden und/oder Empfangen von Daten aufweisen, über welche die Fahrkörbe (5) jeweils Daten hinsichtlich des Betriebs der Aufzuganlage (1) senden und/oder empfangen, wobei die von der wenigstens einen Hilfseinrichtung (122) bereitgestellte Ersatzfunktion die Funktion des Sendens und/oder Empfangens von Daten mittels der Kommunikationsschnittstelle (10) des ersten Fahrkorbs (51) ersetzt.

9. Verfahren nach einem der vorstehenden Ansprüche, **dadurch gekennzeichnet, dass** die Fahrkörbe (5) jeweils eine eigene Steuereinheit (7) aufweisen, wobei diese Steuereinheiten (7) zusammen zumindest einen Teil des Steuerungssystems der Aufzugsanlage (1) bilden und das Verfahren der Fahrkörbe (5) in dem Schachtsystem (4) steuern, wobei die von der wenigstens einen Hilfseinrichtung (122) bereitgestellte Ersatzfunktion (71) die Funktion des Steuerns mittels der Steuereinheit (7) des ersten Fahrkorbs (51) ersetzt.

10. Verfahren nach einem der vorstehenden Ansprüche, **dadurch gekennzeichnet, dass** von einem Normalbetriebsmodus der Aufzuganlage (1) in den Sonderbetriebsmodus gewechselt wird, wenn bezüglich eines ersten Fahrkorbs (51) ein Defekt erkannt wird.

11. Verfahren nach einem der vorstehenden Ansprüche, **dadurch gekennzeichnet, dass** bei einem Erkennen eines Defekts (20) bezüglich eines ersten Fahrkorbs (51) eine Bremse dieses ersten Fahrkorbs (51) ausgelöst wird, derart, dass der erste Fahrkorb (51) durch das Auslösen der Bremse gebremst und in einer fixen Position in dem Schachtsystem (4) gehalten wird.

12. Verfahren nach Anspruch 11, **dadurch gekennzeichnet, dass** die wenigstens eine Hilfseinrichtung (122) mit dem ersten Fahrkorb (51) mechanisch verbunden wird, die Bremse des ersten Fahrkorbs (51) gelöst wird, sodass das Gewicht des ersten Fahrkorbs (51) von der wenigstens einen Hilfseinrichtung (122) aufgenommen wird, der erste Fahrkorb (51) mittels der wenigstens einen Hilfseinrichtung (122) in eine Haltestelle (171) der Aufzuganlage (1) verfahren wird und in der Haltestelle (171) eine Tür des ersten Fahrkorbs (51) geöffnet wird.

13. Verfahren nach einem der vorstehenden Ansprüche, **dadurch gekennzeichnet, dass** der erste Fahrkorb (51) unter Nutzung der seitens der wenigstens einen Hilfseinrichtung (122) bereitgestellten Ersatzfunktion in einen außerhalb von Verkehrswegen der Fahrkörbe (5) gelegenen Depotbereich (16) verfahren wird.

14. Verfahren nach Anspruch 13, **dadurch gekennzeichnet, dass** nach dem Verfahren des ersten Fahrkorbs (51) in den Depotbereich die Aufzuganlage (1) bezüglich der weiteren Fahrkörbe (5) von dem Sonderbetriebsmodus in einen Normalbetriebsmodus verbracht wird.

15. Aufzuganlage (1) mit einem wenigstens einen vertikalen Aufzugschacht (2) umfassenden Schachtsystem (4) und mit einer Mehrzahl von innerhalb des Schachtsystems (4) verfahrbaren Fahrkörben (5),
wobei die Aufzuganlage insbesondere mittels Linearmotoren betrieben wird,
wobei die Mehrzahl von Fahrkörben (5), jeweils mehrere Funktionskomponenten (6, 7, 8, 9) zur Ausführung unterschiedlicher Funktionen aufweisen, wobei in einem Sonderbetriebsmodus der Aufzuganlage (1) einem ersten Fahrkorb (51) wenigstens eine Hilfseinrichtung (121, 122) zugeordnet ist,
wobei die wenigstens eine Hilfseinrichtung (121, 122) eine Ersatzfunktion für zumindest eine Funktion einer der Funktionskomponenten (6, 7, 8, 9) des ersten Fahrkorbs (51) bereitstellt,
wobei durch die seitens der wenigstens einen Hilfseinrichtung (121, 122) bereitgestellte Ersatzfunktion die entsprechende zumindest eine Funktion einer Funktionskomponente (6, 7, 8, 9) des ersten Fahrkorbs (51) ersetzt ist, und
die Aufzuganlage (1) unter Nutzung der bereitgestellten Ersatzfunktion weiter betreibbar ist;
**dadurch gekennzeichnet, dass** um den ersten Fahrkorb (51) ein Schutzbereich gebildet ist, in welchen nur die wenigstens eine Hilfseinrichtung (121, 122) verbracht werden darf, wobei die wenigstens eine Hilfseinrichtung (121, 122) unter Nutzung von Mitteln zur Überwachung des Abstands zu dem ersten Fahrkorb (51) zu dem ersten Fahrkorb (51) verbracht wird.

## Claims

1. Method for operating an elevator system (1), in particular an elevator system operated by means of linear motors, wherein the elevator system (1) comprises
a shaft system (4) comprising at least one vertical elevator shaft (2); and
a plurality of elevator cars (5), each comprising a plurality of functional components (6, 7, 8, 9) for carrying out different functions,
wherein in a special operating mode of the elevator system (1) at least one auxiliary device (121, 122) is associated to a first elevator car (51),
wherein the at least one auxiliary device (121, 122) provides a substitute function for at least one function of one of the functional components (6, 7, 8, 9) of the first elevator car (51),
wherein the corresponding at least one function of a functional component (6, 7, 8, 9) of the first elevator car (51) is replaced by the substitute function provided by the at least one auxiliary device (121, 122), and
the operation of the elevator system (1) is continued by use of the substitute function provided;
**characterized in that**
a protected region is formed around the first elevator car (51), into which region only the at least one auxiliary device (121, 122) is allowed to be brought, wherein the at least one auxiliary device (121, 122) is brought to the first elevator car (51) by use of means for monitoring the distance to the first elevator car (51).

2. Method according to claim 1, **characterized in that** it is determined by means of a diagnostic unit (8) which function of the first elevator car (51) is to be replaced by the substitute function provided by the at least one auxiliary device (121, 122).

3. Method according to any one of the preceding claims, **characterized in that** the at least one auxiliary device (122) comprises its own drive unit (61), by means of which the at least one auxiliary device (122) associated to the first elevator car (51) is moved to the first elevator car (51) via the elevator shaft system (4), wherein the elevator system (1) comprises at least one second elevator car (521, 522), wherein such a second elevator car (521, 522) is associated to the first elevator car (51) as an auxiliary device, wherein a first second elevator car (522) is moved as a first auxiliary device from a first side to the first elevator car (51) and/or a second second elevator car (522) is moved as a second auxiliary device from a second side, which is opposite to the first side, to the first elevator car (51).

4. Method according to any one of the preceding claims, **characterized in that** an electrically conductive connection (15) is established between the first elevator car (51) and the at least one auxiliary device (122), wherein a power supply is provided for the first elevator car (51) via the established electrically conductive connection (15).

5. Method according to claim 4, **characterized in that** the elevator cars (5) each comprise as a functional component a power supply (11) via which the elevator cars (5) are respectively supplied with the required electrical energy, wherein the substitute function provided by the at least one auxiliary device (122) replaces the function of providing energy of the power supply (11) of the first elevator car (51).

6. Method according to any one of the preceding claims, **characterized in that** a communication link (14) for transmitting data is established between the first elevator car (51) and the at least one auxiliary device (122).

7. Method according to claim 6, **characterized in that** via the communication link (14) functional components (6, 7, 8, 9) of the first elevator car (51) are controlled, in particular a brake of the first elevator car (51) and/or a door of the first elevator car (51) and/or a display of the first elevator car (51) and/or a loudspeaker of the first elevator car (51) and/or a lighting system of the first elevator car (51) and/or an intercommunication system of the first elevator car (51) and/or a diagnostic device (8) of the first elevator car (51).

8. Method according to any one of the preceding claims, **characterized in that** the elevator cars (5) each comprise as a functional component, a communication interface (10) for transmitting and/or receiving data, via which the elevator cars (5) respectively transmit and/or receive data relating to the operation of the elevator system (1), wherein the substitute function provided by the at least one auxiliary device (122) replaces the function of transmitting and/or receiving data by means of the communication interface (10) of the first elevator car (51).

9. Method according to any one of the preceding claims, **characterized in that** the elevator cars (5) each comprise their own control unit (7), wherein said control units (7) together form at least a part of the control system of the elevator system (1) and control the movement of the elevator cars (5) in the elevator shaft system (4), wherein the substitute function (71) provided by the at least one auxiliary device (122) replaces the function of controlling by means of the control unit (7) of the first elevator car (51).

10. Method according to any one of the preceding claims, **characterized in that** a normal operating mode of the elevator system (1) is shifted to the special operating mode if a defect is detected with respect to a first elevator car (51).

11. Method according to any one of the preceding claims, **characterized in that**, when a defect (20) is detected with respect to a first elevator car (51), a brake of this first elevator car (51) is triggered in such a way that the first elevator car (51) is braked by the triggering of the brake and is held in a fixed position in the elevator shaft system (4).

12. Method according to claim 11, **characterized in that** the at least one auxiliary device (122) is mechanically connected to the first elevator car (51), the brake of the first elevator car (51) is released so that the weight of the first elevator car (51) is absorbed by the at least one auxiliary device (122), the first elevator car (51) is moved by means of the at least one auxiliary device (122) into a holding position (171) of the elevator system (1), and a door of the first elevator car (51) is opened in the holding position (171).

13. Method according to any one of the preceding claims, **characterized in that** the first elevator car (51) is moved to a depot area (16) located outside of travel routes of the elevator cars (5) by use of the substitute function provided by the at least one auxiliary device (122).

14. Method according to claim 13, **characterized in that**, after the first elevator car (51) has been moved into the depot area, the elevator system (1) is shifted from the special operating mode into a normal operating mode with respect to the other elevator cars (5).

15. Elevator system (1) comprising
an elevator shaft system (4) including at least one vertical elevator shaft (2); and
a plurality of elevator cars (5) movable within the elevator shaft system (4),
wherein the elevator system is operated in particular by means of linear motors,
wherein the plurality of elevator cars (5) each comprise a plurality of functional components (6, 7, 8, 9) for carrying out different functions, wherein at least one auxiliary device (121, 122) is associated to a first elevator car (51) in a special operating mode of the elevator system (1),
wherein the at least one auxiliary device (121, 122) provides a substitute function for at least one function of one of the functional components (6, 7, 8, 9) of the first elevator car (51),
wherein the substitute function provided by the at least one auxiliary device (121, 122) replaces the corresponding at least one function of a functional component (6, 7, 8, 9) of the first elevator car (51), and
the elevator system (1) is operable with the use of the substitute function provided,
**characterized in that**
a protected region is formed around the first elevator car (51), into which region only the at least one auxiliary device (121, 122) is allowed to be brought, wherein the at least one auxiliary device (121, 122) is brought to the first elevator car (51) by use of means for monitoring the distance to the first elevator car (51).

## Revendications

1. Procédé pour faire fonctionner une installation d'ascenseur (1), en particulier une installation d'ascenseur actionnée au moyen de moteurs linéaires, l'installation d'ascenseur (1) comportant un système de cages (4) comportant au moins une cage d'ascenseur verticale (2) et une pluralité de cabines (5) qui présentent chacune plusieurs composants fonctionnels (6, 7, 8, 9) pour l'exécution de différentes fonctions,
dans un mode de fonctionnement spécial de l'installation d'ascenseur (1), au moins un dispositif auxiliaire (121, 122) étant affecté à une première cabine (51),
le au moins un dispositif auxiliaire (121, 122) fournissant une fonction de remplacement pour au moins une fonction de l'un des composants fonctionnels (6, 7, 8, 9) de la première cabine (51),
la fonction de remplacement fournie par le au moins un dispositif auxiliaire (121, 122) remplaçant au moins une fonction correspondante d'un composant fonctionnel (6, 7, 8, 9) de la première cabine (51), et
l'installation d'ascenseur (1) continuant à fonctionner en utilisant la fonction de remplacement fournie ;
**caractérisé en ce que** une zone de protection est formée autour de la première cabine (51), dans laquelle seul le au moins un dispositif auxiliaire (121, 122) peut être amené, le au moins un dispositif auxiliaire (121, 122) étant amené à la première cabine (51) en utilisant des moyens pour contrôler la distance de la première cabine (51).

2. Procédé selon la revendication 1, **caractérisé en ce que** l'on détermine au moyen d'une unité de diagnostic (8) quelle fonction de la première cabine (51) doit être remplacée par la fonction de remplacement fournie par le au moins un dispositif auxiliaire (121, 122).

3. Procédé selon l'une quelconque des revendications précédentes, **caractérisé en ce que** le au moins un dispositif auxiliaire (122) comprend une unité d'entraînement propre (61) au moyen de laquelle le au moins un dispositif auxiliaire (122) affecté à la première cabine (51) est déplacé vers la première cabine (51) via le système de cages (4), l'installation d'ascenseur (1) comportant au moins une seconde cabine (521, 522), une telle seconde cabine (521, 522) étant affectée à la première cabine (51) en tant que dispositif auxiliaire, une première seconde cabine (521) étant déplacée en tant que premier dispositif auxiliaire d'un premier côté vers la première cabine (51) et/ou une deuxième seconde cabine (522) étant déplacée en tant que deuxième dispositif auxiliaire d'un deuxième côté, qui est opposé au premier côté, vers la première cabine (51).

4. Procédé selon l'une des revendications précédentes, **caractérisé en ce que** une connexion électriquement conductrice (15) est établie entre la première cabine (51) et le au moins un dispositif auxiliaire (122), une alimentation électrique étant fournie à la première cabine (51) par l'intermédiaire de la connexion électriquement conductrice (15) établie.

5. Procédé selon la revendication 4, **caractérisé en ce que** les cabines (5) présentent chacune, en tant que composant fonctionnel, une alimentation électrique (11) par laquelle chaque cabine (5) est alimentée avec l'énergie électrique nécessaire, la fonction de remplacement fournie par le au moins un dispositif auxiliaire (122) remplaçant la fonction d'approvisionnement en énergie de l'alimentation électrique (11) de la première cabine (51).

6. Procédé selon l'une quelconque des revendications précédentes, **caractérisé en ce que** une liaison de communication (14) pour la transmission de données est établie entre la première cabine (51) et le au moins un dispositif auxiliaire (122).

7. Procédé selon la revendication 6, **caractérisé en ce que** des composants fonctionnels (6, 7, 8, 9) de la première cabine (51) sont commandés par l'intermédiaire de la liaison de communication (14), notamment un frein de la première cabine (51) et/ou une porte de la première cabine (51) et/ou un affichage de la première cabine (51) et/ou un haut-parleur de la première cabine (51) et/ou un éclairage de la première cabine (51) et/ou un interphone de la première cabine (51) et/ou un dispositif de diagnostic (8) de la première cabine (51).

8. Procédé selon l'une quelconque des revendications précédentes, **caractérisé en ce que** les cabines (5) présentent chacune, en tant que composant fonctionnel, une interface de communication (10) pour l'émission et/ou la réception de données, par laquelle les cabines (5) émettent et/ou reçoivent chacune des données concernant le fonctionnement de l'installation d'ascenseur (1), la fonction de remplacement fournie par le au moins un dispositif auxiliaire (122) remplaçant la fonction d'émission et/ou de réception de données au moyen de l'interface de communication (10) de la première cabine (51).

9. Procédé selon l'une quelconque des revendications précédentes, **caractérisé en ce que** les cabines (5) ont chacune leur propre unité de commande (7), ces unités de commande (7) formant ensemble au moins une partie du système de commande de l'installation d'ascenseur (1) et commandant le déplacement des cabines (5) dans le système de cages (4), la fonction de remplacement (71) fournie par le au moins un dispositif auxiliaire (122) remplaçant la fonction de commande au moyen de l'unité de commande (7) de la première cabine (51).

10. Procédé selon l'une quelconque des revendications précédentes, **caractérisé en ce que** l'on passe d'un mode de fonctionnement normal de l'installation d'ascenseur (1) vers un mode de fonctionnement spécial lorsqu'un défaut concernant une première cabine (51) est détecté.

11. Procédé selon l'une quelconque des revendications précédentes, **caractérisé en ce que**, lors d'une détection d'un défaut (20) concernant une première cabine (51), un frein de cette première cabine (51) est déclenché de sorte que la première cabine (51) est freinée par le déclenchement du frein et est maintenue dans une position fixe dans le système de cages (4).

12. Procédé selon la revendication 11, **caractérisé en ce que** le au moins un dispositif auxiliaire (122) est mécaniquement relié à la première cabine (51), le frein de la première cabine (51) est desserré de sorte que le poids de la première cabine (51) est supporté par le au moins un dispositif auxiliaire (122), la première cabine (51) est déplacée au moyen du au moins un dispositif auxiliaire (122) vers un palier (171) de l'installation d'ascenseur (1) et une porte de la première cabine (51) est ouverte sur ce palier (171).

13. Procédé selon l'une quelconque des revendications précédentes, **caractérisé en ce que** la première cabine (51) est déplacée vers une zone de dépôt (16) située en dehors des voies de circulation des cabines (5) en utilisant la fonction de remplacement fournie par ledit au moins un dispositif auxiliaire (122).

14. Procédé selon la revendication 13, **caractérisé en ce que,** après le déplacement de la première cabine (51) vers la zone de dépôt, en ce qui concerne les autres cabines (5), l'installation d'ascenseur (1) passe du mode de fonctionnement spécial vers un mode de fonctionnement normal.

15. Installation d'ascenseur (1) avec un système de cages (4) comportant au moins une cage d'ascenseur verticale (2) et avec une pluralité de cabines (5) déplaçables à l'intérieur du système de cages (4),
l'installation d'ascenseur étant notamment actionnée au moyen de moteurs linéaires,
la pluralité de cabines (5) présentant chacune plusieurs composants fonctionnels (6, 7, 8, 9) pour l'exécution de différentes fonctions,
dans un mode de fonctionnement spécial de l'installation d'ascenseur (1), au moins un dispositif auxiliaire (121, 122) étant affecté à une première cabine (51),
le au moins un dispositif auxiliaire (121, 122) fournissant une fonction de remplacement pour au moins une fonction de l'un des composants fonctionnels (6, 7, 8, 9) de la première cabine (51),
la fonction de remplacement fournie par le au moins un dispositif auxiliaire (121, 122) remplaçant au moins une fonction correspondante d'un composant fonctionnel (6, 7, 8, 9) de la première cabine (51), et
l'installation d'ascenseur (1) continuant à fonctionner en utilisant la fonction de remplacement fournie ;
**caractérisé en ce que** une zone de protection est formée autour de la première cabine (51), dans laquelle seul le au moins un dispositif auxiliaire (121, 122) peut être amené, le au moins un dispositif auxiliaire (121, 122) étant amené à la première cabine (51) en utilisant des moyens pour contrôler la distance de la première cabine (51).
